# EUROPÄISCHE PATENTANMELDUNG

(11) **EP 4 653 411 A1**
(43) Veröffentlichungstag der Anmeldung: **26.11.2025**
(21) Anmeldenummer: 24176993.4
(22) Anmeldetag: 21.05.2024
(51) Int. Cl.: C04B 41/45, C04B 41/87

(54) **VERFAHREN ZUR BEHANDLUNG VON PORÖSEN GRAPHITSUBSTRATEN SOWIE BEHANDELTES SUBSTRAT UND DESSEN VERWENDUNG**

(71) Anmelder: Fraunhofer-Gesellschaft zur Förderung der angewandten Forschung e.V., 80686 München (DE)
(72) Erfinder: STURM, Felix, 91058 Erlangen (DE); REIMANN, Christian, 91058 Erlangen (DE); SEIMETZ, Chloé, 91058 Erlangen (DE); TREMPA, Matthias, 91058 Erlangen (DE)
(74) Vertreter: Pfenning, Meinig & Partner mbB

(57) **Zusammenfassung**

Die vorliegende Erfindung betrifft ein Verfahren zur Behandlung von porösen Graphitsubstraten, bei welchem mindestens eine Folie bereitgestellt wird, wobei die mindestens eine Folie Silicium-Partikel und mindestens ein Bindemittel enthält, die mindestens eine Folie auf mindestens eine Oberfläche eines porösen Graphitsubstrats aufgebracht wird, und die mindestens eine aufgebrachte Folie mindestens einer Wärmebehandlung unterzogen wird, bei welcher die Silicium-Partikel zu einer Schmelze aufschmelzen, die zumindest teilweise in Poren des porösen Graphitsubstrats infiltriert, wobei in der Schmelze enthaltendes Silicium zumindest teilweise in Siliciumcarbid umgewandelt wird. Zudem betrifft die vorliegende Erfindung auch ein behandeltes Substrat sowie dessen Verwendung.

## Beschreibung

Die vorliegende Erfindung betrifft ein Verfahren zur Behandlung von porösen Graphitsubstraten, bei welchem mindestens eine Folie bereitgestellt wird, wobei die mindestens eine Folie Silicium-Partikel und mindestens ein Bindemittel enthält, die mindestens eine Folie auf mindestens eine Oberfläche eines porösen Graphitsubstrats aufgebracht wird, und die mindestens eine aufgebrachte Folie mindestens einer Wärmebehandlung unterzogen wird, bei welcher die Silicium-Partikel zu einer Schmelze aufschmelzen, die zumindest teilweise in Poren des porösen Graphitsubstrats infiltriert, wobei in der Schmelze enthaltendes Silicium zumindest teilweise in Siliciumcarbid umgewandelt wird. Zudem betrifft die vorliegende Erfindung auch ein behandeltes Substrat sowie dessen Verwendung.

Bei der Herstellung und Verarbeitung von Halbleitermaterialien (Silicium, Siliciumcarbid, Nitride) ist man von der Verfügbarkeit von dichten Graphitbauteilen, die mit keramischen Schutzschichten versehen sind, für den Betrieb der Fertigungsanlagen abhängig. Die Schutzschicht gewährleistet dabei, dass die Graphit-Korrosion (z.B. durch oxidierende oder reduzierende Medien) während der Halbleitermaterialprozessierung minimiert und die Einsatzzeit der Bauteile möglichst lang gehalten bzw. grundsätzlich überhaupt ermöglicht werden kann. Als Material für solche Schutzschichtsysteme wird hauptsächlich Siliziumcarbid (SiC) herangezogen. Die vollständige Anfertigung solcher Bauteile aus einem korrosionsbeständigen Material, meist Keramik, ist auf Grund der Größe und Komplexität nicht möglich bzw. nicht finanziell realisierbar.

Kommerziell verfügbare SiC-beschichtete Graphitbauteile werden typischerweise mittels Chemical Vapour Deposition (CVD) hergestellt. Zum einen sind dabei jedoch besonders große und komplexe Bauteile schwer zu beschichten, da dazu sehr homogene Gasflussbedingungen über die gesamte Bauteiloberfläche vorausgesetzt werden müssen. Zum anderen kommt es in Folge von Unterschieden im Wärmeausdehnungskoeffizient CTE zwischen Substrat und Beschichtung besonderes bei zyklischer thermischer Belastung (Aufheizen und Abkühlen) zur Ausbildung von Rissen und Schichtablösung, was zur verstärkten Korrosion dieser Bauteile im Einsatz führt (siehe z.B. Park et al., "Enhancing the oxidation resistance of graphite by applying an SiC coat with crack healing at an elevated temperature", Applied Surface Science, 378, 2016, S. 341-349).

Weitere Ansätze zur Herstellung von SiC-Schichten wie Pack Cementation (siehe z.B. Paccaud et al., "Silicon carbide coating by reactive pack cementation-Part II: Silicon monoxide/carbon reaction", Chem. Vap. Deposition 2000, 6, No. 1, S. 41-50) oder die reaktive Infiltration von Silizium (Si)-Schmelze (siehe z.B. EP 3 330 240 B1) bieten zwar den Vorteil besserer Schichthaftung bei steigendem CTE-Unterschied, sind aber hinsichtlich Schichtqualität, Ressourceneffizienz und Implementierung in der großtechnischen Fertigung nicht zielführend.

Zudem ist zu beachten, dass die Beschichtung von Graphitbauteilen grundsätzlich sehr problematisch und deutlich komplizierter als die Beschichtung anderer Materialien, wie z.B. keramischer Verbundwerkstoffe, ist, sodass aus dem Stand der Technik bekannte und dort zur Beschichtung anderer Substrate eingesetzte Beschichtungsmethoden in der Regel nicht für Graphitsubstrate bzw. Graphitbauteile in Frage kommen. Graphitsubstrate weisen eine offene Porosität von bis zu 25 Vol.-% auf, wobei die Porositätsverteilung innerhalb eines Bauteils oder einer Probe nicht zwingend homogen ist. Die - im Vergleich zu anderen Materialien, wie z.B. keramischer Verbundwerkstoffe - geringere Porosität in Kombination mit den lokalen Porositäts- und damit einhergehenden Dichteunterschieden erschweren die Beschichtung von Graphitbauteilen, wobei insbesondere die Infiltration durch die geringere Porosität des Graphits, im Vergleich zu anderen Materialien, wie z.B. keramischer Verbundwerkstoffe, erheblich erschwert wird. In der Folge führt die Verwendung von für Substrate aus anderen Materialien, wie z.B. keramischen Verbundwerkstoffen, angewandten Beschichtungsmethoden bei Graphitbauteilen in der Regel zu keiner erfolgreichen Beschichtung.

Ausgehend hiervon war es die Aufgabe der vorliegenden Erfindung ein Verfahren zur Behandlung von porösen Graphitsubstraten anzugeben, mit welchem Substrate mit einer erhöhten Widerstandsfähigkeit erhalten werden können.

Diese Aufgabe wird bezüglich eines Verfahrens zur Behandlung von porösen Substraten mit den Merkmalen des Patentanspruchs 1 und bezüglich eines behandelten Substrats mit den Merkmalen des Patentanspruchs 11 gelöst. In Patentanspruch 15 werden Verwendungsmöglichkeiten des erfindungsgemäßen behandelten Substrats angegeben. Die abhängigen Patentansprüche stellen vorteilhafte Weiterbildungen dar.

Erfindungsgemäß wird somit ein Verfahren zur (Oberflächen-)Behandlung von porösen Graphitsubstraten angegeben, bei welchem
a) mindestens eine Folie bereitgestellt wird, wobei die mindestens eine Folie Silicium-Partikel und mindestens ein Bindemittel enthält,
b) die mindestens eine Folie auf mindestens eine Oberfläche eines porösen Graphitsubstrats aufgebracht wird, und
c) die mindestens eine aufgebrachte Folie mindestens einer Wärmebehandlung unterzogen wird, bei welcher die Silicium-Partikel zu einer Schmelze aufschmelzen, die (zumindest) teilweise in Poren des porösen Graphitsubstrats infiltriert, wobei in der Schmelze enthaltendes Silicium zumindest teilweise, vorzugsweise vollständig, in Siliciumcarbid, vorzugsweise polykristallines Siliciumcarbid, umgewandelt wird.

In Schritt a) des erfindungsgemäßen Verfahrens wird mindestens eine Folie bereitgestellt. Die mindestens eine Folie enthält Silicium-Partikel und mindestens ein Bindemittel. Vorzugsweise kann die mindestens eine Folie auch mindestens einen Weichmacher enthalten. Zudem ist es optional möglich, dass die mindestens eine Folie weitere Komponenten enthält, wie z.B. mindestens einen Entschäumer (z.B. Fettalkoholpolyalkylenglykolether), mindestens einen Dotierstoff, und/oder mindestens ein Tensid (bzw. Modifikator zur Senkung der Oberflächenspannung). Die mindestens eine Folie kann beispielsweise aus den Silicium-Partikeln, dem mindestens einen Bindemittel, optional mindestens einem Weichmacher, optional mindestens einem Entschäumer (z.B. Fettalkoholpolyalkylenglykolether), optional mindestens einem Dotierstoff, und optional mindestens einem Tensid (bzw. Modifikator zur Senkung der Oberflächenspannung) bestehen. Vorzugsweise handelt es sich bei den in der mindestens einen Folie enthaltenen Silicium-Partikeln um Silicium-Granulat oder Silicium-Pulver, besonders bevorzugt um Silicium-Granulat.

Unter einem Bindemittel kann dabei allgemein ein Stoff verstanden werden, der an Phasengrenzen anderer Stoffe chemische Bindungen herstellt oder begünstigt oder Effekte wie Kohäsion, Adsorption und Adhäsion bzw. Reibung auslöst oder vergrößert.

Das mindestens eine Bindemittel dient letztlich dazu, dass die Silicium-Partikel aneinander haften, und sorgt somit für die Stabilität bzw. den Zusammenhalt der mindestens einen Folie. Ein optional in der Folie enthaltener Weichmacher kann die Flexibilität der Folie erhöhen. Es ist jedoch (alternativ oder zusätzlich) auch möglich, dass das mindestens eine Bindemittel als Weichmacher fungiert und somit für eine gewisse Flexibilität der Folie sorgt. Außerdem ist es auch möglich, dass die Folie weder einen Weichmacher enthält noch das mindestens eine Bindemittel als Weichmacher fungiert.

Als Basis für die Herstellung der mindestens einen Folie kann vorzugsweise eine Suspension auf Basis eines Lösungsmittels (z.B. Wasser) verwendet werden, die Silicium-Partikel (z.B. mit einer mittleren Partikelgröße d50 von 1 bis 2000 µm) sowie mindestens ein Bindemittel (z.B. Carboxymethylcellulose CMC oder Polyvinylalkohol PVA) und optional mindestens einen Weichmacher (z.B. Polyethylenglykol PEG) umfasst. Eine beispielhafte Herstellung der Folie kann dann so erfolgen, dass die Suspension z.B. mittels Rakeln oder Foliengießen zu einer Folie verarbeitet wird, deren Dicke z.B. 500 bis 5000 µm betragen kann, wobei sich nach dem Trocknen und dem Entzug des Lösungsmittels so eine (flexible) Folie mit eingebetteten Si-Partikeln ergibt. Die Dichte pro Flächeneinheit der Folie kann dabei durch die Dicke der Folie bzw. den Anteil des eingesetzten Si-Feststoffes bestimmt (bzw. eingestellt) werden.

In Schritt b) des erfindungsgemäßen Verfahrens wird die mindestens eine Folie auf mindestens eine Oberfläche eines porösen Graphitsubstrats aufgebracht. Das Aufbringen der Folie auf die Oberfläche kann beispielsweise durch ein Benetzen mit einem Lösungsmittel, das in der Lage ist, das mindestens eine Bindemittel sowie vorzugsweise auch weitere organischen Anteile der Folie (z.B. eine optional vorhandenen Weichmacher) zu lösen, und ein danach erfolgendes Auflegen und Andrücken der Folie sowie ein Trocknen der Folie erfolgen. Das mindestens eine Bindemittel kann durch das Trocknen wieder aktiviert werden und erlaubt eine feste Verbindung mit dem Substrat nach dem Trocknen. Vorzugsweise kann die Folie vor, während, und/oder nach Schritt b) in jede beliebige Form geschnitten, gestanzt oder gefaltet werden. Zudem ist es beispielsweise möglich, dass mehrere Folien bzw. Folienstücke verwendet werden und die Folien bzw. Folienstücke durch Bestreichen bzw. Besprühen mit Lösungsmittel an den zu fügenden Enden bzw. Flächen beliebig verlängert, verbreitert, gestapelt, und/oder laminiert werden. Vorzugweise kann aus Reststücken der Folie Silicium-Feststoff (bzw. die Silicium-Partikel) durch Auflösen und Auswaschen in Lösungsmittel wieder zurückgewonnen, aufbereitet und erneut eingesetzt werden. Als Lösungsmittel kann beispielsweise Wasser eingesetzt werden. In Schritt b) kann die mindestens eine Folie so auf der mindestens einen Oberfläche des porösen Graphitsubstrats aufgebracht werden, dass sie (nach dem Aufbringen) an mindestens eine Kante des Substrats angrenzt, d.h. die aufgebrachte mindestens eine Folie grenzt an mindestens eine Kante des Substrats. Vorzugsweise wird in Schritt b) die mindestens eine Folie so auf die mindestens eine Oberfläche des porösen Graphitsubstrats aufgebracht, dass sie die mindestens eine Oberfläche des porösen Graphitsubstrats vollständig bedeckt.

In Schritt c) des erfindungsgemäßen Verfahrens wird die mindestens eine aufgebrachte Folie mindestens einer Wärmebehandlung unterzogen. Bei der mindestens einen Wärmebehandlung schmelzen die Silicium-Partikel zu einer Schmelze auf, wobei die Schmelze teilweise in Poren des porösen Graphitsubstrats infiltriert und wobei in der Schmelze enthaltendes Silicium zumindest teilweise, vorzugsweise vollständig, (mit dem Kohlenstoff aus dem porösen Graphitsubstrat) zu Siliciumcarbid, vorzugsweise polykristallinem Siliciumcarbid, reagiert. Hierbei infiltriert die Schmelze nur teilweise in Poren des porösen Graphitsubstrats, d.h. es infiltriert nicht die gesamte Schmelze in die Poren des porösen Substrats. Stattdessen entsteht aus einem nicht in die Poren des porösen Graphitsubstrats infiltrierten Teil der Schmelze eine Siliciumcarbidschicht auf der mindestens einen Oberfläche (wohingegen aus einem in Poren des porösen Graphitsubstrats infiltrierten Teil der Schmelze in den Poren angeordnetes Siliciumcarbid entsteht). Das letztlich erhaltene (bzw. mit dem erfindungsgemäßen Verfahren hergestellte) Substrat weist somit an der behandelten Oberfläche (bzw. der mindestens einen Oberfläche) eine Siliciumcarbidschicht und eine darunter liegende Infiltrationszone, in der die Poren (des Graphitmaterials) zumindest teilweise mit Siliciumcarbid gefüllt sind (bzw. Siliciumcarbid enthalten), auf. Die Kombination aus der (oberflächlichen) Siliciumcarbidschicht und der die (zumindest teilweise) mit Siliciumcarbid gefüllten (bzw. Siliciumcarbid enthaltenden) Poren aufweisenden Infiltrationszone kann auch als Schutzschicht bezeichnet werden.

Das mit dem erfindungsgemäßen Verfahren hergestellte Substrat weist durch die genannte Schutzschicht (d.h. die Kombination aus der (oberflächlichen) Siliciumcarbidschicht und der (zumindest teilweise) mit Siliciumcarbid gefüllten (bzw. Siliciumcarbid enthaltenden) Poren aufweisenden Infiltrationszone) eine sehr geringe Gaspermeabilität auf und ist vorzugsweise vollständig gasundurchlässig. Hierbei kann durch eine nahezu oder im Wesentlichen vollständige Versiegelung der behandelten Oberfläche bzw. ein nahezu oder im Wesentlichen vollständiger Verschluss der oberflächennahen Poren ein Eindringen von Gasen bzw. Fluiden in das Material und dementsprechend eine Interaktion mit korrosiven Medien (z.B. Sauerstoff), die zur Degradation des Kohlenstoffmaterials des Substrats führen würde, verhindert werden. Dies trägt zu einer erhöhten Widerstandsfähigkeit der mit dem erfindungsgemäßen Verfahren erhaltenen Substrate bei. Zudem weist das hergestellte Substrat durch die Siliciumcarbidschicht sowie durch das Vorhandensein des Siliciumcarbids in den Poren in der Infiltrationszone des Substrats sowohl eine erhöhte Härte als auch eine erhöhte Verschleißfestigkeit auf, was ebenfalls zu einer erhöhten Widerstandsfähigkeit beiträgt.

Zudem zeichnet sich das erfindungsgemäße Verfahren ganz besonders dadurch aus, dass durch die Verwendung der mindestens einen Folie die Silicium-Partikel mit sehr hoher Genauigkeit auf die zu behandelnden Bereiche des Substrats aufgebracht werden können. Im Vergleich zu anderen Auftragsmethoden, z.B. CVD-Beschichtung oder Auftrag von Partikeln mittels einer Suspension (z.B. mittels Sprühbeschichtung), kann so eine sehr viel genauere und gezieltere Beschichtung erfolgen, wobei letztlich vor allem auch eine deutlich homogenere Schutzschicht (d.h. eine homogenere Siliciumcarbidschicht sowie eine homogenere Infiltrationszone) erhalten wird. So ergibt sich bei alternativen Auftragsmethoden, wie z.B. dem Auftrag von Silicium-Partikeln mittels einer (wässrigen) Suspension auf das Substrat (z.B. mittels Sprühbeschichtung), das Problem, dass die Bereiche an den Kanten und Ecken des Substrats nicht ausreichend beschichtet werden, da dort ein dünnerer Beschichtungsfilm als an weiter von den Kanten entfernten Bereichen erhalten wird, sodass letztlich eine inhomogene Schutzschicht resultiert, die in den Bereichen an den Kanten des Substrats dünner ausfällt als an den restlichen Bereichen, was zu einer geringeren Widerstandsfähigkeit in den Bereichen an den Kanten des Substrats führt. Dies kann mit dem erfindungsgemäßen Verfahren verhindert werden, da durch die Verwendung der mindestens einen Folie die Silicium-Partikel gleichmäßig über den gesamten gewünschten zu behandelnden Bereich der Oberfläche des Substrats aufgebracht werden können und somit auch an den Bereichen an den Kanten und Ecken des Substrats eine ausreichend dicke Schutzschicht erhalten wird. In der Folge können mit dem erfindungsgemäßen Verfahren sehr homogene Schutzschichten über den gesamten gewünschten Bereich erhalten werden, was dazu führt, dass die gewünschte Widerstandsfähigkeit des Substrats über den gesamten gewünschten Bereich des Substrats, insbesondere auch an den Bereichen an den Kanten und Ecken, erzielt werden kann. Dies trägt letztlich zu einer weiteren Erhöhung der Widerstandsfähigkeit der hergestellten Substrate bei. Beispielsweise weisen die mit dem erfindungsgemäßen Verfahren hergestellten Substrate somit eine hervorragende Oxidationsbeständigkeit über einen sehr langen Zeitraum auf. Die hervorragende Oxidationsbeständigkeit ist dabei über einen längeren Zeitraum gegeben als bei behandelten Substraten, bei denen der Auftrag von Silicium-Partikeln mittels einer (wässrigen) Suspension (z.B. mittels Sprühbeschichtung) auf das Substrat erfolgt ist.

Im Rahmen der vorliegenden Erfindung wurde festgestellt, dass durch das erfindungsgemäße Verfahren und die dadurch erhaltene homogene Schutzschicht überraschenderweise eine sehr gute Beschichtung von Graphitsubstraten bzw. Graphitbauteilen ermöglicht wird, deren Beschichtung eigentlich grundsätzlich sehr problematisch und deutlich komplizierter ist als die Beschichtung anderer Materialien, wie z.B. keramischer Verbundwerkstoffe, da Beschichtung, insbesondere die Infiltration, durch die geringere Porosität des Graphits, im Vergleich zu anderen Materialien, wie z.B. keramischer Verbundwerkstoffe, erheblich erschwert wird. Hierbei ist auch von Vorteil, dass durch die Verwendung der mindestens einen Folie das Beschichtungssystem (z.B. über die Siliciummenge) präzise auf die Graphiteigenschaften eingestellt werden kann.

Zudem ist anzumerken, dass durch die Infiltration der Schmelze in die Poren des Substrats und die daraus resultierenden (zumindest teilweise) mit Siliciumcarbid gefüllten (bzw. Siliciumcarbid enthaltenden) Poren eine extrem starke Haftfestigkeit erreicht wird und Rissbildung sowie Delamination auf Grund von CTE-Unterschieden deutlich minimiert bzw. verhindert werden können. Hieraus resultiert einerseits eine hohe Schichtqualität und Oberflächengüte. Andererseits kann durch die Vermeidung von Fehlern in der Schutzschicht - wie z.B. Rissen und Delamination - eine Verringerung der Widerstandsfähigkeit verhindert werden.

Im Weiteren ermöglicht und vereinfacht die Verwendung von mindestens einer Folie zum Auftrag der Silicium-Partikel auch die Beschichtung von Substraten bzw. Bauteilen mit sehr komplizierter Geometrie, da die mindestens eine Folie wunschgemäß in der Form angepasst bzw. zugeschnitten und dann auch problemlos platziert werden kann, ohne dass es zu einem Verschwimmen oder Abtropfen wie beim Auftrag einer Suspension kommen kann. Auch die Beschichtung von Bereichen mit unterschiedlichen Konzentrationen an Silicium-Partikeln ist möglich, indem z.B. in unterschiedlichen Bereichen eine verschiedene Anzahl von Folien übereinander und/oder mindestens eine Folie mit Bereichen unterschiedlicher Konzentration an Silicium-Partikeln eingesetzt wird.

Außerdem können mit dem erfindungsgemäßen Verfahren auch bereits eingesetzte Bauteile mit angegriffener oder beschädigter Beschichtung wiederholt beschichtet und aufbereitet werden.

Der durch die Verwendung der mindestens einen Folie vereinfachte Auftragsprozess der Silicium-Partikel führt ferner zu einem erhörten Bauteildurchsatz und einer Reduzierung der Herstellungskosten pro beschichtetem Substrat bzw. Bauteil und damit auch zu einem einfacheren, schnelleren und kostengünstigeren Herstellungsverfahren.

Eine bevorzugte Ausführungsform des erfindungsgemäßen Verfahrens zeichnet sich dadurch aus, dass
- die Silicium-Partikel eine mittlere Partikelgröße d50 im Bereich von 1 µm bis 2000 µm, bevorzugt im Bereich von 50 µm bis 1500 µm, besonders bevorzugt im Bereich von 100 µm bis 1000 µm, ganz besonders bevorzugt im Bereich von 510 µm bis 950 µm (oder von mehr als 500 µm bis 950 µm), insbesondere im Bereich von 600 µm bis 900 µm, aufweisen, und/oder
- die mindestens eine Folie eine Dicke von mindestens 500 µm (oder von mehr als 500 µm), bevorzugt im Bereich von 500 µm bis 5000 µm (oder von mehr als 500 µm und bis 5000 µm), besonders bevorzugt im Bereich von 600 µm bis 4000 µm, ganz besonders bevorzugt im Bereich von 700 µm bis 3000 µm, insbesondere im Bereich von 800 µm bis 2000 µm, aufweist.

Durch eine solche Dicke der mindestens einen Folie kann bei Graphitsubstraten eine besonders hohe Widerstandsfähigkeit der behandelten Substrate erreicht werden.

Die mittlere Partikelgröße d50 der Silicium-Partikel kann beispielsweise bestimmt werden mittels Laserbeugung (z.B. gemäß ISO 13320:2020-01).

Eine weitere bevorzugte Ausführungsform des erfindungsgemäßen Verfahrens ist dadurch gekennzeichnet, dass die Silicium-Partikel (über den gesamten Bereich bzw. über alle Bereiche der mindestens einen Folie) eine unimodale Partikelgrößenverteilung oder (über den gesamten Bereich bzw. über alle Bereiche der mindestens einen Folie) eine multimodale Partikelgrößenverteilung, vorzugsweise bimodale Partikelgrößenverteilung, aufweisen. Beispielsweise können die Silicium-Partikel eine multimodale Partikelgrößenverteilung, vorzugsweise eine bimodale Partikelgrößenverteilung, aufweisen und eine erste Gruppe von Silicium-Partikeln mit einer mittleren Partikelgröße im d50 im Bereich von 1 µm bis 50 µm, bevorzugt im Bereich von 3 µm bis 20 µm, sowie eine zweite Gruppe von Silicium-Partikeln mit einer mittleren Partikelgröße im d50 im Bereich von 100 µm bis 2000 µm, bevorzugt im Bereich von 510 µm bis 950 µm, umfassen oder daraus bestehen.

Die Partikelgrößenverteilung und/oder die mittlere Partikelgröße d50 der Silicium-Partikel kann beispielsweise bestimmt werden mittels Laserbeugung (z.B. gemäß ISO 13320:2020-01).

Durch die Verwendung von Silicium-Partikeln mit einer multimodalen bzw. bimodalen Partikelgrößenverteilung kann eine bessere Passung und Packungsdichte der Silicium-Partikel in der mindestens eines Folie erreicht werden, sodass die mindestens eine Folie eine höhere Siliciumpartikeldichte und in der Folge eine höhere Homogenität aufweist, wodurch letztlich eine noch homogenere Schutzschicht (d.h. eine homogenere Siliciumcarbidschicht sowie eine homogenere Infiltrationszone) durch eine gleichmäßigere und homogenere Oberflächenbedeckung erhalten werden kann.

Gemäß einer weiteren bevorzugten Ausführungsform können die Silicium-Partikel (über den gesamten Bereich bzw. über alle Bereiche der mindestens einen Folie) eine unimodale Partikelgrößenverteilung aufweisen. Beispielsweise können die Silicium-Partikel hierbei (im gesamten Bereich bzw. in allen Bereichen) der mindestens einen Folie eine mittlere Partikelgröße d50 im Bereich von 1 µm bis 2000 µm, bevorzugt im Bereich von 50 µm bis 1500 µm, besonders bevorzugt im Bereich von 100 µm bis 1000 µm, ganz besonders bevorzugt im Bereich von 510 µm bis 950 µm (oder von mehr als 500 µm bis 950 µm), insbesondere im Bereich von 600 µm bis 900 µm, aufweisen.

Eine bevorzugte Ausführungsform des erfindungsgemäßen Verfahrens zeichnet sich dadurch aus, dass die mindestens eine Folie mindestens einen ersten Bereich und mindestens einen zweiten Bereich aufweist, wobei die Silicium-Partikel im mindestens einen zweiten Bereich eine mittlere Partikelgröße d50 aufweisen, die größer ist als eine mittlere Partikelgröße d50 der Silicium-Partikel im mindestens einen ersten Bereich, wobei vorzugsweise die mittlere Partikelgröße d50 der Silicium-Partikel im mindestens einen ersten Bereich im Bereich von 1 µm bis 50 µm, bevorzugt im Bereich von 3 µm bis 20 µm, liegt und/oder die mittlere Partikelgröße d50 der Silicium-Partikel im mindestens einen zweiten Bereich im Bereich von 100 µm bis 2000 µm, bevorzugt im Bereich von 510 µm bis 950 µm, liegt.

Durch die Verwendung von Silicium-Partikeln mit unterschiedlicher mittlerer Partikelgröße in verschiedenen Bereichen der Folie kann eine bessere bzw. höhere Oberflächenbedeckung bei Bauteilen mit verschiedenen Dicken und/oder komplexen Geometrien und/oder starken lokalen Porositätsunterschieden erzielt werden, wodurch letztlich eine noch homogenere Schutzschicht (d.h. eine homogenere Siliciumcarbidschicht sowie eine homogenere Infiltrationszone) erhalten werden kann.

Gemäß einer weiteren bevorzugten Ausführungsform können die Silicium-Partikel im gesamten Bereich (bzw. in allen Bereichen) der mindestens einen Folie eine mittlere Partikelgröße d50 im Bereich von 1 µm bis 2000 µm, bevorzugt im Bereich von 50 µm bis 1500 µm, besonders bevorzugt im Bereich von 100 µm bis 1000 µm, ganz besonders bevorzugt im Bereich von 510 µm bis 950 µm (oder von mehr als 500 µm bis 950 µm), insbesondere im Bereich von 600 µm bis 900 µm, aufweisen. Beispielsweise können die Silicium-Partikel in allen Bereichen der mindestens einen Folie im Wesentlichen die gleiche mittlere Partikelgröße d50 aufweisen.

Eine weitere bevorzugte Ausführungsform des erfindungsgemäßen Verfahrens ist dadurch gekennzeichnet, dass die mindestens eine Folie mindestens einen ersten Bereich und mindestens einen zweiten Bereich aufweist, wobei der mindestens eine zweite Bereich eine höhere Silicium-Konzentration pro Flächeneinheit (bzw. Silicium-Menge pro Flächeneinheit) aufweist als der mindestens eine erste Bereich, wobei vorzugsweise die mindestens eine Folie mindestens einen dritten Bereich aufweist, der eine höhere Silicium-Konzentration pro Flächeneinheit (bzw. Silicium-Menge pro Flächeneinheit) aufweist als der mindestens eine zweite Bereich.

Die Silicium-Konzentration pro Flächeneinheit (bzw. Silicium-Menge pro Flächeneinheit) in den jeweiligen Bereichen kann bei der Herstellung der mindestens einen Folie durch Verwendung unterschiedlicher Silicium-Konzentrationen bzw. Silicium-Mengen in den jeweiligen Bereichen entsprechend eingestellt werden. Die Silicium-Konzentration pro Flächeneinheit (bzw. Silicium-Menge pro Flächeneinheit) kann an der bereits hergestellten Folie beispielsweise bestimmt werden, indem Folienstücke mit definierter Fläche ausgeschnitten und anschließend gewogen werden. Die definierten Flächen betragen dabei vorzugsweise über 1 cm², besonders bevorzugt über 150 cm², ganz besonders bevorzugt über 250 cm².

Gemäß einer weiteren bevorzugten Ausführungsform kann die mindestens eine Folie über ihren gesamten Bereich bzw. in allen ihren Bereichen im Wesentlichen die gleiche Silicium-Konzentration pro Flächeneinheit (bzw. Silicium-Menge pro Flächeneinheit) aufweisen.

Eine weitere bevorzugte Ausführungsform des erfindungsgemäßen Verfahrens zeichnet sich dadurch aus, dass die mindestens eine Folie in Schritt a) dadurch bereitgestellt wird, dass mindestens eine Suspension hergestellt wird, die die Silicium-Partikel, das mindestens eine Bindemittel und mindestens ein Lösungsmittel, vorzugsweise Wasser, sowie optional zusätzlich mindestens einen Weichmacher umfasst, und die mindestens eine Suspension zur mindestens einen Folie verarbeitet wird, vorzugsweise durch Rakeln oder Foliengießen. Zudem ist es optional möglich, dass die mindestens eine Suspension weitere Komponenten enthält, wie z.B. mindestens einen Entschäumer (z.B. Fettalkoholpolyalkylenglykolether), mindestens einen Dotierstoff, und/oder mindestens ein Tensid (bzw. Modifikator zur Senkung der Oberflächenspannung). Die mindestens eine Suspension kann beispielsweise aus den Silicium-Partikeln, dem mindestens einen Bindemittel, dem mindestens einen Lösungsmittel (vorzugsweise Wasser), optional mindestens einem Weichmacher, optional mindestens einem Entschäumer (z.B. Fettalkoholpolyalkylenglykolether), optional mindestens einem Dotierstoff, und optional mindestens einem Tensid (bzw. Modifikator zur Senkung der Oberflächenspannung) bestehen. Vorzugsweise handelt es sich bei den in der mindestens einen Suspension enthaltenen Silicium-Partikeln um Silicium-Granulat oder Silicium-Pulver, besonders bevorzugt um Silicium-Granulat.

Eine weitere bevorzugte Ausführungsform des erfindungsgemäßen Verfahrens ist dadurch gekennzeichnet, dass
- das mindestens eine Bindemittel ausgewählt ist aus der Gruppe bestehend aus Polyvinylalkohol; Polyethylenglycol; Polyvinylbutyral; Polyacrylsäure; Polyurethan; Polymethylmethacrylat; Chloropren-Kautschuk; Phenolharz; Acrylharz; Cellulose; Cellulose-Derivaten, vorzugsweise Carboxymethylcellulose, Hydroxyethylcellulose; Alginsäure; Dextrin; sowie Mischungen hiervon, wobei das mindestens eine Bindemittel vorzugsweise ausgewählt ist aus der Gruppe bestehend aus Polyvinylalkohol, Carboxymethylcellulose, Polyethylenglycol, sowie Mischungen hiervon, und/oder
- die mindestens eine Folie mindestens einen sich vom mindestens einen Bindemittel unterscheidenden Weichmacher enthält, wobei der mindestens eine Weichmacher vorzugsweise ausgewählt ist aus der Gruppe bestehend aus Benzylbutylphthalat, Dibutylphthalat, Dimethylphthalat, Dioctylphthalat, Glycerin, Polyvinylpyrrolidon, Polypropylenglycol, Octadecansäurebutylester, sowie Mischungen hiervon.

Eine weitere bevorzugte Ausführungsform des erfindungsgemäßen Verfahrens zeichnet sich dadurch aus, dass die mindestens eine Folie
- 40 bis 99,9 Gew.-%, bevorzugt 55 bis 95 Gew.-%, besonders bevorzugt 60 bis 90 Gew.-%, der Silicium-Partikel, bezogen auf das Gesamtgewicht der mindestens einen Folie, enthält, und/oder
- 0,1 bis 25 Gew.-%, bevorzugt 1 bis 10 Gew.-%, besonders bevorzugt 3 bis 5 Gew.-%, des mindestens einen Bindemittels, bezogen auf das Gesamtgewicht der mindestens einen Folie, enthält, und/oder
- 0 bis 35 Gew.-%, bevorzugt 1 bis 15 Gew.-%, besonders bevorzugt 5 bis 10 Gew.-%, mindestens eines sich vom mindestens einen Bindemittel unterscheidenden Weichmachers, bezogen auf das Gesamtgewicht der mindestens einen Folie, enthält.

Eine weitere bevorzugte Ausführungsform des erfindungsgemäßen Verfahrens zeichnet sich dadurch aus, dass die mindestens eine Folie aus einer Zusammensetzung mit den folgenden Komponenten besteht:
- 40 bis 99,9 Gew.-%, bevorzugt 60 bis 97,9 Gew.-%, besonders bevorzugt 75 bis 91 Gew.-%, der Silicium-Partikel,
- 0,1 bis 25 Gew.-%, bevorzugt 1 bis 10 Gew.-%, besonders bevorzugt 3 bis 5 Gew.-%, des mindestens einen Bindemittels,
- 0 bis 35 Gew.-%, bevorzugt 1 bis 15 Gew.-%, besonders bevorzugt 5 bis 10 Gew.-%, mindestens eines sich vom mindestens einen Bindemittel unterscheidenden Weichmachers, bezogen auf das Gesamtgewicht der mindestens einen Folie,
- 0 bis 35 Gew.-%, bevorzugt 0,1 bis 15 Gew.-%, besonders bevorzugt 1 bis 10 Gew.-%, mindestens eines Additivs ausgewählt aus der Gruppe bestehend aus Entschäumern (z.B. Fettalkoholpolyalkylenglykolether), Dotierstoffen, Tensiden (bzw. Modifikatoren zur Senkung der Oberflächenspannung), sowie Mischungen hiervon,
wobei sich die Anteile der Komponenten zu 100 Gew.-% ergänzen.

Eine weitere bevorzugte Ausführungsform des erfindungsgemäßen Verfahrens ist dadurch gekennzeichnet, dass
- die mindestens eine Folie vor, während, und/oder nach Schritt b) geschnitten, gestanzt und/oder gefaltet wird, und/oder
- die mindestens eine Folie mindestens zwei Folien umfasst, die vor, während, und/oder nach Schritt b) aneinandergefügt werden.

Eine weitere bevorzugte Ausführungsform des erfindungsgemäßen Verfahrens zeichnet sich dadurch aus, dass das Aufbringen der mindestens einen Folie auf die mindestens eine Oberfläche des porösen Graphitsubstrats in Schritt b) dadurch erfolgt, dass zunächst die mindestens eine Oberfläche des porösen Graphitsubstrats und/oder die mindestens eine Folie mit mindestens einem Lösungsmittel, in welchem das mindestens eine Bindemittel zumindest teilweise löslich ist, vorzugsweise Wasser, benetzt wird, anschließend die mindestens eine Folie mit der mindestens einen Oberfläche des porösen Graphitsubstrats in Kontakt gebracht wird, und die mindestens eine mit der mindestens einen Oberfläche des porösen Substrats in Kontakt stehende Folie mindestens einem Trocknungsprozess unterzogen wird, wobei der mindestens eine Trocknungsprozess vorzugsweise bei einer Temperatur im Bereich von 10 °C bis 200 °C, bevorzugt von 80 °C bis 100 °C, und/oder über eine Dauer von 15 min bis 48 h, bevorzugt von 1 h bis 12 h, erfolgt.

Eine weitere bevorzugte Ausführungsform des erfindungsgemäßen Verfahrens ist dadurch gekennzeichnet, dass die mindestens eine Wärmebehandlung
- bei einer Temperatur im Bereich von 1400 °C bis 1800 °C, bevorzugt von 1410 °C bis 1700 °C, besonders bevorzugt von 1450 °C bis 1550 °C, erfolgt, und/oder
- über eine Dauer von 1 h bis 10 h, bevorzugt von 4 h bis 6 h, erfolgt, und/oder
- unter Vakuum oder unter Inertgasatmosphäre, bevorzugt Argon-Atmosphäre, bei einem (Prozess-)Druck von 10 mbar bis 2000 mbar, bevorzugt von 100 mbar bis 1800 mbar, besonders bevorzugt von 500 mbar bis 1500 mbar, ganz besonders bevorzugt von 800 mbar bis 1200 mbar,
erfolgt.

Durch Variation der Gasatmosphäre, der Temperatur, der Dauer und/oder des Prozessdrucks kann die Dicke der Infiltrationszone und damit auch der Grad der Versiegelung bzw. die Gaspermeabilität beeinflusst und eingestellt werden.

Eine weitere bevorzugte Ausführungsform des erfindungsgemäßen Verfahrens zeichnet sich dadurch aus, dass
- das poröse Graphitsubstrat ein poröses iso-Graphitsubstrat ist, und/oder
- das poröse Graphitsubstrat ein Graphitmaterial enthält oder daraus besteht, welches einen thermischen Ausdehnungskoeffizienten von mindestens 2,8 · 10⁻⁶ K⁻¹, bevorzugt von mindestens 3,0 · 10⁻⁶ K⁻¹, besonders bevorzugt von mindestens 3,2 · 10⁻⁶ K⁻¹, aufweist, und/oder
- das poröse Graphitsubstrat eine offene Porosität, gemessen mittels Quecksilberporosimetrie, von mindestens 12 %, bevorzugt von 12 % bis 30 %, besonders bevorzugt von 14 % bis 25 %, ganz besonders bevorzugt von 15 % bis 20 %, aufweist, und/oder
- die Poren des porösen Graphitsubstrats einen mittleren Porendurchmesser im Bereich von 0,1 µm bis 10 µm, bevorzugt von 1 µm bis 5 µm, besonders bevorzugt von 1,5 µm bis 5 µm aufweisen.

Der thermische Ausdehnungskoeffizient (bzw. der Wärmeausdehnungskoeffizient) kann beispielsweise bestimmt werden gemäß DIN 51909:2009-05.

Die offene Porosität des porösen Graphitsubstrats wird bestimmt mittels Quecksilberporosimetrie (z.B. gemäß DIN 66133:1993-06).

Der mittlere Porendurchmesser der Poren des porösen Graphitsubstrats kann beispielsweise bestimmt werden mittels Quecksilberporosimetrie (z.B. gemäß DIN 15901-1:2019-03).

Die vorliegende Erfindung betrifft zudem auch ein behandeltes Substrat umfassend ein Graphitmaterial mit Poren, wobei das Substrat an mindestens einer Oberfläche eine Siliciumcarbidschicht und eine darunter (d.h. unter der Siliciumcarbidschicht) liegende Infiltrationszone, in der die Poren des Graphitmaterials zumindest teilweise mit Siliciumcarbid gefüllt sind (bzw. in der die Poren des Graphitmaterials (zumindest teilweise) Siliciumcarbid enthalten), aufweist, wobei die Siliciumcarbidschicht in mindestens einem (vorzugsweise in jedem) an mindestens eine Kante des behandelten Substrats angrenzenden Bereich (der Siliciumcarbidschicht) eine Dicke aufweist, die mindestens 70 % der mittleren Dicke der (gesamten) Siliciumcarbidschicht entspricht. Vorzugsweise erstreckt sich der mindestens eine an mindestens eine Kante des behandelten Substrats angrenzende Bereich (der Siliciumcarbidschicht) dabei (von der mindestens einen Kante) bis zu einem Abstand, gemessen von der mindestens einen Kante,
- von 2 mm, bevorzugt 4 mm, besonders bevorzugt 10 mm, und/oder,
- von 10 %, bevorzugt 20 %, des Abstands zwischen der mindestens einen Kante und einer der mindestens einen Kante gegenüberliegenden Kante des Substrats.

Die Kombination aus der Siliciumcarbidschicht und der die (zumindest teilweise) mit Siliciumcarbid gefüllten (bzw. Siliciumcarbid enthaltenden) Poren aufweisenden Infiltrationszone kann auch als Schutzschicht bezeichnet werden. Mit anderen Worten weist das Substrat an mindestens eine Oberfläche eine Schutzschicht auf, die eine Siliciumcarbidschicht sowie eine darunter (d.h. unter der Siliciumcarbidschicht) liegende Infiltrationszone, in der die Poren des Graphitmaterials zumindest teilweise mit Siliciumcarbid gefüllt sind (bzw. Siliciumcarbid enthalten), umfasst. Die Infiltrationszone liegt bezogen auf das Substrat weiter innen als die Siliciumcarbidschicht, d.h. die Schutzschicht umfasst die Siliciumcarbidschicht als äußeren (direkt an der Oberfläche liegenden) Teil und die Infiltrationszone als inneren Teil.

Bei der Infiltrationszone handelt es sich letztlich um den Bereich bzw. die Bereiche des behandelten Substrats, in welchem/welchen Siliciumcarbid in den Poren des Graphitmaterials vorhanden ist. In dem/den Bereich(en) des behandelten Substrats außerhalb der Infiltrationszone ist kein Siliciumcarbid in den Poren des Graphitmaterials vorhanden. Die Infiltrationszone erstreckt sich somit von der Siliciumcarbidschicht (bzw. vom inneren Rand der Siliciumcarbidschicht) bis zu der/den am weitesten von der mindestens einen Oberfläche entfernten Stelle(n) des behandelten Substrats, bis zu welcher/welchen Siliciumcarbid in den Poren des Substratmaterials (durchgehend von der Siliciumcarbidschicht aus) vorhanden ist.

Die Dicke der Siliciumcarbidschicht (an einer bestimmten Stelle) und/oder die mittlere Dicke der Siliciumcarbidschicht kann/können beispielsweise mittels optischer Mikroskopie an Querschliffen (vertikal zur Infiltrationsrichtung) bestimmt werden, z.B. gemäß DIN EN ISO 1463:2021-08.

Die mittlere Dicke der Siliciumcarbidschicht kann beispielsweise dadurch bestimmt werden, dass einzelne Messwerte für die Dicke der Siliciumcarbidschicht an verschiedenen über die gesamte Länge und/oder Breite der Siliciumcarbidschicht verteilten Stellen mittels optischer Mikroskopie an Querschliffen bestimmt und dann ein Mittelwert der einzelnen Messwerte berechnet wird.

Vorzugsweise weist die Siliciumcarbidschicht eine mittlere Dicke von mindestens 10 µm, bevorzugt von 10 µm bis 10000 µm, besonders bevorzugt von 100 µm bis 2000 µm, auf.

Vorzugsweise ist das erfindungsgemäße behandelte Substrat mit dem erfindungsgemäßen Verfahren herstellbar oder hergestellt.

Es ist bevorzugt, dass
- die mindestens eine Kante jeweils einen Kantenradius im Bereich von R₀ (bzw. 0 mm) bis R₅ (bzw. 5 mm), bevorzugt von R_{0,5} (bzw. 0,5 mm) bis R₄ (bzw. 4 mm), besonders bevorzugt von R₁ (bzw. 1 mm) bis R₃ (bzw. 3 mm), aufweist, und/oder
- ein Winkel zwischen zwei jeweils die mindestens eine Kante bildenden Flächen im Bereich von 10° bis 170°, bevorzugt von 30° bis 150°, besonders bevorzugt von 45° bis 135°, liegt.

Der Kantenradius und/oder der Winkel zwischen zwei jeweils die mindestens eine Kante bildenden Flächen kann beispielsweise bestimmt werden gemäß DIN EN ISO 13715:2020-01.

Eine bevorzugte Ausführungsform des erfindungsgemäßen behandelten Substrats ist dadurch gekennzeichnet, dass das behandelte Substrat
- eine (Gas-)Permeabilität von maximal 1 · 10⁻¹⁶ m², bevorzugt von maximal 1 · 10⁻¹⁷ m², besonders bevorzugt von maximal 1 · 10⁻¹⁸ m², ganz besonders bevorzugt von maximal 1 · 10⁻¹⁹ m², aufweist, und/oder
- eine (Gas-)Permeabilität aufweist, die um einen Faktor von mindestens 10, bevorzugt von mindestens 100, geringer ist als eine (Gas-)Permeabilität des Substrats vor der Behandlung, und/oder
- in der Infiltrationszone eine offene Porosität, bestimmt mittels Quecksilberporosimetrie, von maximal 10 %, bevorzugt maximal 8 %, besonders bevorzugt maximal 5 %, aufweist, und/oder
- in der Infiltrationszone eine offene Porosität, bestimmt mittels Quecksilberporosimetrie aufweist, die um mindestens 7 %, bevorzugt um mindestens 10 %, besonders bevorzugt um mindestens 12 %, bezogen auf das Gesamtvolumen des behandelten Substrats, geringer ist als eine offene Porosität des behandelten Substrats außerhalb der Infiltrationszone, und/oder
- einen spezifischen Widerstand von maximal 1500 mΩcm, bevorzugt von maximal 10 mΩcm, aufweist, und/oder
- das behandelte Substrat eine Oxidationsbeständigkeit aufweist, die dadurch gekennzeichnet ist, dass, nach Aussetzen des behandelten Substrats für mehr als 162 h, bevorzugt für mehr als 170 h, besonders bevorzugt für mehr als 180 h, ganz besonders bevorzugt für mehr als 190 h, bei 1100 °C an synthetischer Luft (200 ml/min, 1 bar), eine Masseabnahme des behandelten Substrats weniger als 0,72 %, bevorzugt weniger als 0,5 %, besonders bevorzugt weniger als 0,3 %, ganz besonders bevorzugt weniger als 0,2 %, (bezogen auf die Masse des behandelten Substrats vor dem Aussetzen bei 1100 °C an der synthetischen Luft) beträgt, und/oder
- kein elementares Silicium aufweist, und/oder
- mit dem erfindungsgemäßen Verfahren herstellbar oder hergestellt ist.

Die (Gas-)Permeabilität des behandelten Substrats und/oder die (Gas-)Permeabilität des Substrats vor der Behandlung können beispielsweise bestimmt werden mittels Differenzdruckverfahren (z.B. gemäß EN 993-4 : 1995).

Das Vorhandensein des Merkmals, dass das behandelte Substrat eine (Gas-)Permeabilität aufweist, die um einen Faktor von mindestens 10, bevorzugt von mindestens 100, geringer ist als die (Gas-)Permeabilität des Substrats vor der Behandlung, kann beispielsweise lediglich am behandelten Substrat bestimmt werden, indem zunächst die (Gas-)Permeabilität des behandelten Substrats, z.B. mittels Differenzdruckverfahren (z.B. gemäß EN 993-4 : 1995), bestimmt wird, anschließend Siliciumcarbidschicht und die Infiltrationszone vom behandelten Substrat entfernt werden, z.B. durch Abschleifen, danach die (Gas-)Permeabilität dieses so erhaltenen Substrats ohne Siliciumcarbidschicht und Infiltrationszone, z.B. mittels Differenzdruckverfahren (z.B. gemäß EN 993-4 : 1995), bestimmt wird, und schließlich die beiden bestimmte (Gas-)Permeabilitäten miteinander verglichen bzw. in ein entsprechendes Verhältnis gesetzte werden. Die (Gas-)Permeabilität des behandelten Substrats, von dem die Siliciumcarbidschicht und die Infiltrationszone entfernt wurden, entspricht dabei der (Gas-)Permeabilität des unbehandelten Substrats.

Die offene Porosität in der Infiltrationszone des behandelten Substrats und die offene Porosität des behandelten Substrats außerhalb der Infiltrationszone kann bestimmt werden mittels Quecksilberporosimetrie (z.B. gemäß DIN 66133:1993-06).

Die offene Porosität des behandelten Substrats außerhalb der Infiltrationszone entspricht der offenen Porosität des unbehandelten Substrats (auch im Bereich der späteren Infiltrationszone).

Der spezifische Widerstand des behandelten Substrats kann beispielsweise bestimmt werden gemäß DIN IEC 60413/402.

Vorzugsweise weist das behandelte Substrat weniger als 5 Vol.-%, bevorzugt weniger als 3 Vol.-%, besonders bevorzugt weniger als 1 Vol.-%, elementares Silicium auf. Ganz besonders bevorzugt weist das behandelte Substrat kein elementares Silicium auf. Dies kann beispielsweise mittels Röntgendiffraktometrie (XRD) oder Energiedispersiver Röntgenspektroskopie (EDX) bestimmt werden.

Eine weitere bevorzugte Ausführungsform des erfindungsgemäßen behandelten Substrats zeichnet sich dadurch aus, dass
- das Graphitmaterial ein iso-Graphitmaterial ist, und/oder
- die Infiltrationszone eine mittlere Dicke von mindestens 100 µm, bevorzugt von 100 µm bis 1200 µm, besonders bevorzugt von 200 µm bis 800 µm, aufweist, und/oder
- das Siliciumcarbid, mit dem die Poren des Graphitmaterials in der Infiltrationszone zumindest teilweise gefüllt sind, 3C-SiC enthält, vorzugsweise 3C-SiC als Hauptphase aufweist, und/oder
- eine lokale Konzentration an Siliciumcarbid in der Infiltrationszone mit zunehmender Entfernung von der mindestens einer Oberfläche abnimmt, und/oder
- die Infiltrationszone mindestens einen ersten Bereich und mindestens einen zweiten Bereich aufweist, wobei der mindestens eine zweite Bereich gleich weit von der mindestens einen Oberfläche entfernt ist wie der mindestens eine erste Bereich und eine höhere Siliciumcarbid-Konzentration pro Volumeneinheit (bzw. Siliciumcarbid-Menge pro Volumeneinheit) aufweist als der mindestens eine erste Bereich, wobei vorzugsweise die mindestens eine Infiltrationszone mindestens einen dritten Bereich aufweist, der gleich weit von der mindestens einen Oberfläche entfernt ist wie der mindestens eine zweite Bereich (und der mindestens eine erste Bereich) und eine höhere Siliciumcarbid-Konzentration pro Volumeneinheit (bzw. Siliciumcarbid-Menge pro Volumeneinheit) aufweist als der mindestens eine zweite Bereich.

Dass das Siliciumcarbid, mit dem die Poren des Graphitmaterials in der Infiltrationszone zumindest teilweise gefüllt sind, 3C-SiC enthält, kann beispielsweise bestimmt werden mittels Röntgendiffraktometrie (XRD).

Dass das Siliciumcarbid, mit dem die Poren des Graphitmaterials in der Infiltrationszone zumindest teilweise gefüllt sind, 3C-SiC als Hauptphase aufweist, bedeutet, dass das Siliciumcarbid, mit dem die Poren des Graphitmaterials in der Infiltrationszone zumindest teilweise gefüllt sind, eine 3C-Siliciumcarbid-Phase aufweist und keine weiteren Phasen aufweist, die einen höheren gewichtsprozentualen Anteil am gesamten Siliciumcarbid, mit dem die Poren des Graphitmaterials in der Infiltrationszone zumindest teilweise gefüllt sind, haben, als die 3C-Siliciumcarbid-Phase.

Dass das Siliciumcarbid, mit dem die Poren des Graphitmaterials in der Infiltrationszone zumindest teilweise gefüllt sind, 3C-SiC als Hauptphase aufweist, kann beispielsweise bestimmt werden mittels Röntgendiffraktometrie (XRD).

3C-SiC (3C-Siliciumcarbid) kann auch β-SiC (β-Siliciumcarbid) bezeichnet werden.

Vorzugsweise weist das Siliciumcarbid, mit dem die Poren des Graphitmaterials in der Infiltrationszone zumindest teilweise gefüllt sind, einen Anteil von mindestens 50 Gew.-%, bevorzugt einen Anteil von mindestens 70 Gew.-%, besonders bevorzugt einen Anteil von mindestens 90 Gew.-%, ganz besonders bevorzugt einen Anteil von mindestens 95 Gew.-%, beispielsweise einen Anteil von mindestens 99 Gew.-%, 3C-SiC (3C-Siliciumcarbid) bzw. β-SiC (β-Siliciumcarbid) auf.

Vorzugsweise weist das Siliciumcarbid, mit dem die Poren des Graphitmaterials in der Infiltrationszone zumindest teilweise gefüllt sind, einen Anteil von höchstens 5 Gew.-%, bevorzugt einen Anteil von höchstens 1 Gew.-%, besonders bevorzugt einen Anteil von höchstens 0,1 Gew.-%, α-SiC (α-Siliciumcarbid) auf. Ganz besonders bevorzugt enthält das Siliciumcarbid, mit dem die Poren des Graphitmaterials in der Infiltrationszone zumindest teilweise gefüllt sind, kein α-SiC (α-Siliciumcarbid).

Der Anteil von 3C-SiC bzw. β-SiC und/oder der Anteil von α-SiC am Siliciumcarbid, mit dem die Poren des Graphitmaterials in der Infiltrationszone zumindest teilweise gefüllt sind kann/können beispielswese bestimmt werden mittels Röntgendiffraktometrie (XRD).

Die lokale Konzentration an Siliciumcarbid in der Infiltrationszone und/oder die Siliciumcarbid-Konzentration pro Volumeneinheit (bzw. Siliciumcarbid-Menge pro Volumeneinheit) in einem Bereich (z.B. im mindestens einen ersten Bereich, im mindestens einen zweiten Bereich, und/oder im mindestens einen dritten Bereich) der Infiltrationszone kann/können bestimmt werden mittels Energiedispersiver Röntgenspektroskopie (EDX).

Es ist bevorzugt, dass die Siliciumcarbidschicht in jedem an mindestens eine Kante des behandelten Substrats angrenzenden Bereich (der Siliciumcarbidschicht) eine Dicke aufweist, die mindestens 70 % einer mittleren Dicke der Siliciumcarbidschicht entspricht.

Eine weitere bevorzugte Ausführungsform des erfindungsgemäßen behandelten Substrats ist dadurch gekennzeichnet, dass
- die Siliciumcarbidschicht in dem mindestens einen (vorzugsweise in jedem) an mindestens eine Kante des behandelten Substrats angrenzenden Bereich (der Siliciumcarbidschicht) eine Dicke aufweist, die mindestens 75 %, bevorzugt mindestens 80 %, besonders bevorzugt mindestens 85 %, ganz besonders bevorzugt mindestens 90 %, und/oder höchstens 125 %, bevorzugt höchstens 120 %, besonders bevorzugt höchstens 115 %, ganz besonders bevorzugt höchstens 110 %, insbesondere höchstens 105 %, der mittleren Dicke der (gesamten) Siliciumcarbidschicht entspricht, wobei vorzugsweise der mindestens eine an mindestens eine Kante des behandelten Substrats angrenzende Bereich (der Siliciumcarbidschicht) sich dabei (von der mindestens einen Kante) bis zu einem Abstand, gemessen von der mindestens einen Kante,
   ∘ von 2 mm, bevorzugt 4 mm, besonders bevorzugt 10 mm, erstreckt, und/oder
   ∘ von 10 %, bevorzugt 20 %, des Abstands zwischen der mindestens einen Kante und einer der mindestens einen Kante gegenüberliegenden Kante des Substrats erstreckt,
   und/oder
- die Siliciumcarbidschicht an allen Stellen (der Siliciumcarbidschicht), die maximal 2 mm, bevorzugt maximal 4 mm, besonders bevorzugt maximal 10 mm, von mindestens einer Kante des behandelten Substrats entfernt sind, eine Dicke aufweist, die mindestens 70 %, bevorzugt mindestens 75 %, besonders bevorzugt mindestens 80 %, ganz besonders bevorzugt mindestens 85 %, insbesondere mindestens 90 %, und/oder höchstens 125 %, bevorzugt höchstens 120 %, besonders bevorzugt höchstens 115 %, ganz besonders bevorzugt höchstens 110 %, insbesondere höchstens 105 %, der mittleren Dicke der (gesamten) Siliciumcarbidschicht entspricht, und/oder
- die Siliciumcarbidschicht an allen Stellen (der Siliciumcarbidschicht), die von mindestens einer Kante des behandelten Substrats maximal 10 %, bevorzugt maximal 20 %, des Abstands zwischen der mindestens einen Kante und einer der mindestens einen Kante gegenüberliegenden Kante des Substrats entfernt sind, eine Dicke aufweist, die mindestens 70 %, bevorzugt mindestens 75 %, besonders bevorzugt mindestens 80 %, ganz besonders bevorzugt mindestens 85 %, insbesondere mindestens 90 %, und/oder höchstens 125 %, bevorzugt höchstens 120 %, besonders bevorzugt höchstens 115 %, ganz besonders bevorzugt höchstens 110 %, insbesondere höchstens 105 %, der mittleren Dicke der (gesamten) Siliciumcarbidschicht entspricht.

Eine weitere bevorzugte Ausführungsform des erfindungsgemäßen behandelten Substrats ist zeichnet sich dadurch aus, dass
- die Siliciumcarbidschicht in dem mindestens einen (vorzugsweise in jedem) an mindestens eine Kante des behandelten Substrats angrenzenden Bereich (der Siliciumcarbidschicht) eine Dicke aufweist, die mindestens 75 %, bevorzugt mindestens 80 %, besonders bevorzugt mindestens 85 %, ganz besonders bevorzugt mindestens 90 %, und/oder höchstens 125 %, bevorzugt höchstens 120 %, besonders bevorzugt höchstens 115 %, ganz besonders bevorzugt höchstens 110 %, insbesondere höchstens 105 %, der mittleren Dicke der Siliciumcarbidschicht in mindestens einem übrigen Bereich (der Siliciumcarbidschicht) (d.h. mindestens einem nicht an mindestens eine Kante des behandelten Substrats angrenzenden Bereich der Siliciumcarbidschicht) entspricht, wobei vorzugsweise sich der mindestens eine an mindestens eine Kante des behandelten Substrats angrenzende Bereich (der Siliciumcarbidschicht) dabei (von der mindestens Kante) bis zu einem Abstand, gemessen von der mindestens einen Kante,
   ∘ von 2 mm, bevorzugt 4 mm, besonders bevorzugt 10 mm, erstreckt, und/oder
   ∘ von 10 %, bevorzugt 20 %, des Abstands zwischen der mindestens einen Kante und einer der mindestens einen Kante gegenüberliegenden Kante des Substrats erstreckt,
   und/oder
- die Siliciumcarbidschicht an allen Stellen (der Siliciumcarbidschicht), die maximal 2 mm, bevorzugt maximal 4 mm, besonders bevorzugt maximal 10 mm, von mindestens einer Kante des behandelten Substrats entfernt sind, eine Dicke aufweist, die mindestens 70 %, bevorzugt mindestens 75 %, besonders bevorzugt mindestens 80 %, ganz besonders bevorzugt mindestens 85 %, insbesondere mindestens 90 %, und/oder höchstens 125 %, bevorzugt höchstens 120 %, besonders bevorzugt höchstens 115 %, ganz besonders bevorzugt höchstens 110 %, insbesondere höchstens 105 %, der mittleren Dicke der Siliciumcarbidschicht an den (bzw. allen) übrigen Stellen (d.h. den Stellen, die mehr als 2 mm, bzw. mehr als 4 mm , bzw. mehr als 10 mm, von mindestens einer Kante des behandelten Substrats entfernt sind) entspricht, und/oder
- die Siliciumcarbidschicht an allen Stellen (der Siliciumcarbidschicht), die von mindestens einer Kante des behandelten Substrats maximal 10 %, bevorzugt maximal 20 %, des Abstands zwischen der mindestens einen Kante und einer der mindestens einen Kante gegenüberliegenden Kante des Substrats entfernt sind, eine Dicke aufweist, die mindestens 70 %, bevorzugt mindestens 75 %, besonders bevorzugt mindestens 80 %, ganz besonders bevorzugt mindestens 85 %, insbesondere mindestens 90 %, und/oder höchstens 125 %, bevorzugt höchstens 120 %, besonders bevorzugt höchstens 115 %, ganz besonders bevorzugt höchstens 110 %, insbesondere höchstens 105 %, der mittleren Dicke der Siliciumcarbidschicht an den (bzw. allen) übrigen Stellen (d.h. den Stellen, die mehr als 10 %, bzw. mehr als 20 %, des Abstands zwischen der mindestens einen Kante und der der mindestens einen Kante gegenüberliegenden Kante des Substrats entfernt sind) entspricht.

Eine weitere bevorzugte Ausführungsform des erfindungsgemäßen behandelten Substrats ist dadurch gekennzeichnet, dass
- die Siliciumcarbidschicht in dem mindestens einen (vorzugsweise in jedem) an mindestens eine Kante des behandelten Substrats angrenzenden Bereich (der Siliciumcarbidschicht) eine Dicke aufweist, die mindestens 75 %, bevorzugt mindestens 80 %, besonders bevorzugt mindestens 85 %, ganz besonders bevorzugt mindestens 90 %, und/oder höchstens 125 %, bevorzugt höchstens 120 %, besonders bevorzugt höchstens 115 %, ganz besonders bevorzugt höchstens 110 %, insbesondere höchstens 105 %, der Dicke der Siliciumcarbidschicht im (bzw. in jedem) übrigen Bereich (der Siliciumcarbidschicht) (d.h. jedem nicht an mindestens eine Kante des behandelten Substrats angrenzenden Bereich der Siliciumcarbidschicht) entspricht, wobei vorzugsweise sich der mindestens eine an mindestens eine Kante des behandelten Substrats angrenzende Bereich (der Siliciumcarbidschicht) dabei (von der mindestens einen Kante) bis zu einem Abstand, gemessen von der mindestens einen Kante,
   ∘ von 2 mm, bevorzugt 4 mm, besonders bevorzugt 10 mm, erstreckt, und/oder
   ∘ von 10 %, bevorzugt 20 %, des Abstands zwischen der mindestens einen Kante und einer der mindestens einen Kante gegenüberliegenden Kante des Substrats erstreckt,
   und/oder
- die Siliciumcarbidschicht an allen Stellen (der Siliciumcarbidschicht), die maximal 2 mm, bevorzugt maximal 4 mm, besonders bevorzugt maximal 10 mm, von mindestens einer Kante des behandelten Substrats entfernt sind, eine Dicke aufweist, die mindestens 70 %, bevorzugt mindestens 75 %, besonders bevorzugt mindestens 80 %, ganz besonders bevorzugt mindestens 85 %, insbesondere mindestens 90 %, und/oder höchstens 125 %, bevorzugt höchstens 120 %, besonders bevorzugt höchstens 115 %, ganz besonders bevorzugt höchstens 110 %, insbesondere höchstens 105 %, der Dicke der Siliciumcarbidschicht an allen übrigen Stellen (d.h. den Stellen, die mehr als 2 mm, bzw. mehr als 4 mm , bzw. mehr als 10 mm, von mindestens einer Kante des behandelten Substrats entfernt sind) entspricht, und/oder
- die Siliciumcarbidschicht an allen Stellen (der Siliciumcarbidschicht), die von mindestens einer Kante des behandelten Substrats maximal 10 %, bevorzugt maximal 20 %, des Abstands zwischen der mindestens einen Kante und einer der mindestens einen Kante gegenüberliegenden Kante des Substrats entfernt sind, eine Dicke aufweist, die mindestens 70 %, bevorzugt mindestens 75 %, besonders bevorzugt mindestens 80 %, ganz besonders bevorzugt mindestens 85 %, insbesondere mindestens 90 %, und/oder höchstens 125 %, bevorzugt höchstens 120 %, besonders bevorzugt höchstens 115 %, ganz besonders bevorzugt höchstens 110 %, insbesondere höchstens 105 %, der Dicke der Siliciumcarbidschicht an allen übrigen Stellen (d.h. den Stellen, die mehr als 10 %, bzw. mehr als 20 %, des Abstands zwischen der mindestens einen Kante und der der mindestens einen Kante gegenüberliegenden Kante des Substrats entfernt sind) entspricht.

Eine weitere bevorzugte Ausführungsform des erfindungsgemäßen behandelten Substrats zeichnet sich dadurch aus, dass die Siliciumcarbidschicht an jeder Stelle (der Siliciumcarbidschicht), die mindestens 4 mm, bevorzugt mindestens 2 mm, besonders bevorzugt mindestens 1 mm, ganz besonders bevorzugt mindestens 0,5 mm, von der mindestens einen Kante des behandelten Substrats entfernt ist eine Dicke aufweist, die mindestens 70 %, bevorzugt mindestens 75 %, besonders bevorzugt mindestens 80 %, ganz besonders bevorzugt mindestens 85 %, insbesondere mindestens 90 %, und/oder höchstens 130 %, bevorzugt höchstens 125 %, besonders bevorzugt höchstens 120 %, ganz besonders bevorzugt höchstens 115 %, insbesondere höchstens 110 %, der mittleren Dicke der (gesamten) Siliciumcarbidschicht entspricht.

Eine weitere bevorzugte Ausführungsform des erfindungsgemäßen behandelten Substrats zeichnet sich dadurch aus, dass die Siliciumcarbidschicht an jeder Stelle (der Siliciumcarbidschicht) eine Dicke aufweist, die mindestens 70 %, bevorzugt mindestens 75 %, besonders bevorzugt mindestens 80 %, ganz besonders bevorzugt mindestens 85 %, insbesondere mindestens 90 %, und/oder höchstens 130 %, bevorzugt höchstens 125 %, besonders bevorzugt höchstens 120 %, ganz besonders bevorzugt höchstens 115 %, insbesondere höchstens 110 %, der mittleren Dicke der (gesamten) Siliciumcarbidschicht entspricht.

Eine weitere bevorzugte Ausführungsform des erfindungsgemäßen behandelten Substrats ist dadurch gekennzeichnet, dass
- die mittlere Dicke der Siliciumcarbidschicht eine Standardabweichung von maximal 50 %, bevorzugt von maximal 20 %, besonders bevorzugt von maximal 10 %, aufweist.

Die Dicke der Infiltrationszone erstreckt vom an die Siliciumcarbidschicht grenzenden Rand der Infiltrationszone bis zum der Siliciumcarbidschicht gegenüberliegenden Rand der Infiltrationszone.

Die Dicke der Infiltrationszone (an einer bestimmten Stelle) und/oder die mittlere Dicke der Infiltrationszone kann/können beispielsweise mittels optischer Mikroskopie an Querschliffen (vertikal zur Infiltrationsrichtung) bestimmt werden, z.B. gemäß DIN EN ISO 1463:2021-08.

Die mittlere Dicke der Infiltrationszone kann beispielsweise dadurch bestimmt werden, dass einzelne Messwerte für die Dicke der Infiltrationszone an verschiedenen über die gesamte Länge und/oder Breite der Infiltrationszone verteilten Stellen mittels optischer Mikroskopie an Querschliffen (vertikal zur Infiltrationsrichtung) bestimmt und dann ein Mittelwert der einzelnen Messwerte berechnet wird. Hierbei kann die Dicke der Infiltrationszone über die gesamte Länge und/oder Breite der Infiltrationszone gemittelt werden.

Im Weiteren betrifft die vorliegende Erfindung auch die Verwendung des erfindungsgemäßen behandelten Substrats als Komponente für Hochtemperaturöfen, bevorzugt Heizer, Isolationskomponente, Halterung; als Tiegel oder Tiegelelement.

Die vorliegende Erfindung wird anhand der nachfolgenden Figuren und Beispiele näher erläutert, ohne die Erfindung auf die speziell dargestellten Parameter zu beschränken.

### Ausführungsbeispiel 1

### a) Herstellung der Suspension

Es wird eine Folien-Suspension mit folgender Zusammensetzung hergestellt:
- 57,9 Gew.% H₂O dest.
- 0,9 Gew.-% Carboxymethylcellulose (Bindemittel)
- 3,9 Gew.-% Polyethylenglycol 400 (Weichmacher)
- 0,3 Gew.-% Fettalkoholpolyalkylenglykolether (Entschäumer)
- 37,0 Gew-% Silicium-Granulat (d50 ca. 180 µm)

Zunächst werden das destillierte Wasser (H₂O dest.) und das Bindemittel eingewogen und in ein Gefäß gegeben. Zur Homogenisierung und Lösung des Bindemittels wird die Suspension händisch durchgeschüttelt, bis keine Klumpen mehr am Gefäßboden sind. Anschließend wird der Weichmacher abgewogen und hinzugegeben. Zur Homogenisierung wird die Suspension 20 h auf den Rollenstand bei 30 rpm (Gefäß) ausgelagert. Anschließend werden das Silicium-Granulat und der Entschäumer abgewogen und der Suspension hinzugefügt. Zur Homogenisierung der Suspension mit Feststoffanteil wird diese 15 min auf den Rollenstand bei 30 rpm (Gefäß) ausgelagert. Die Suspension wird anschließend mittels Rakeln zu einer Folie, der Dicke 1500 µm, verarbeitet und 24 h bei Raumtemperatur getrocknet.

### b) Beschichtungsvorgang

Ein poröses Graphit-Substrat, das einen mittleren Porendurchmesser von 1,8 µm aufweist, wird bereitgestellt. Es weiset eine Substratgeometrie von 5×5×1 cm³ auf.

Das Aufbringen der Folie mit einer Si-Konzentration von 0,055 ± 0,005 g Si/cm² auf die Oberfläche (5x5 cm²) des Substrats erfolgt durch das Benetzen der Substratoberfläche mit Wasser und ein danach erfolgendes Auflegen und Andrücken der Folie.

### c) Trocknungsprozess

Das folien-beschichtete Substrat wird für 20 h bei 90 °C in Luft zum Trocknen in den Wärmeschrank ausgelagert.

### d) Infiltrationsprozess

Das getrocknete Substrat wird in einer graphitischen Probenkammer in einem Ofen platziert. Die beschichteten Flächen haben dabei keinen Kontakt zu den Ofeneinbauten. Es erfolgt eine Evakuierung des Ofenvolumens (10⁻³ mbar) und ein Aufheizen mit 250 K/h von Raumtemperatur auf 1500°C. Die Temperatur von 1500 °C wird für 5 h gehalten. Danach erfolgt ein Abkühlen von 1500 °C auf Raumtemperatur mit 200 K/h (Abkühlrate nimmt ab 700 °C auf bis zu 50 K/min ab, da keine aktive Kühlung vorhanden ist.) Nach Abkühlung erfolgt ein Fluten des Ofenvolumens mit Argon bis zu Atmosphärendruck und Entnahme des Substrats.

### Vergleichsbeispiel 1

### a) Herstellung der Suspension

Es wird eine Sprüh-Suspension mit folgender Zusammensetzung hergestellt:
- 66,7 Gew.% H₂O dest.
- 0,3 Gew.-% Peptapon 520 (Bindemittel)
- 33 Gew-% Silicium-Granulat (d50 ca. 800 µm)

Zunächst werden das destillierte Wasser (H₂O dest.) und das Bindemittel eingewogen und in ein Gefäß gegeben. Zur Homogenisierung und Lösung des Bindemittels wird die Suspension 20 h auf den Rollenstand bei 30 rpm (Gefäß) ausgelagert. Anschließend wird das Silicium-Granulat abgewogen und der Suspension hinzugefügt. Zur Homogenisierung der Suspension mit Feststoffanteil wird diese 15 min auf den Rollenstand bei 30 rpm (Gefäß) ausgelagert.

### b) Beschichtungsvorgang

Ein poröses Graphit-Substrat, das einen mittleren Porendurchmesser von 1,8 µm aufweist, wird bereitgestellt. Es weiset eine Substratgeometrie von 5×5×1 cm³ auf.

Die Beschichtung des Substrats erfolgt mittels Sprühauftragung. Dabei erfolgt eine Zerstäubung der Suspension mittels Druckluft (4 bar). Die Suspension wird mittels Düse zugeführt (Durchmesser 2,5 mm). Das Substrat wird mit zu beschichtender Fläche senkrecht zur Düse und damit zur Sprühstrahlrichtung gelagert, wobei das Substrat mit 10 rpm rotiert wird. Der Abstand von Düse zu Substratoberfläche beträgt 20 cm. Es erfolgt ein konstanter Auftrag von 0,04 ± 0,015 g Si/cm². Nach der Trocknung wird die Probe so gedreht, dass eine noch nicht beschichtete Fläche senkrecht zum Sprühstrahl zeigt und diese wird analog beschichtet. Der Vorgang wird wiederholt, bis alle Seiten mit Beschichtung versehen sind.

### c) Trocknungsprozess

Das sprüh-beschichtete Substrat wird für 20 h bei 90 °C in Luft zum Trocknen in den Wärmeschrank ausgelagert.

### d) Infiltrationsprozess

Der Infiltrationsprozess läuft auf die gleiche Weise ab wie bei Ausführungsbeispiel 1.

### Vergleich und Analyse der in Ausführungsbeispiel 1 und Vergleichsbeispiel 1 erhaltenen behandelten Substrate

Die erhaltenen behandelten Substrate weisen alle an der jeweils behandelten Oberfläche keinerlei Rückstände von elementarem Silicium auf und zeichnen sich somit alle durch eine sehr hohe Oberflächengüte aus.

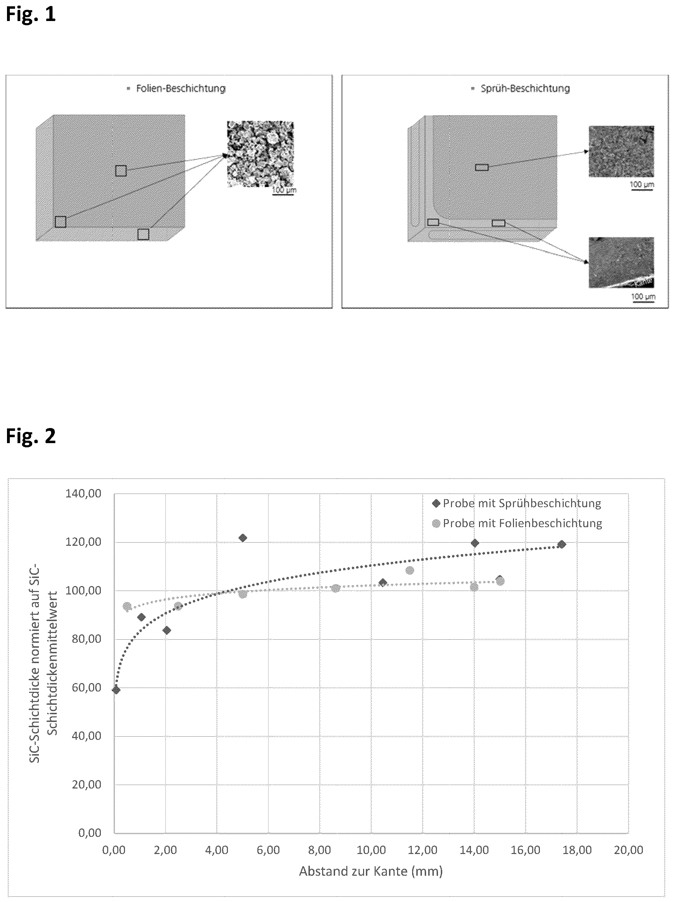

Aufnahmen der beschichteten Probenoberflächen mit einem Rasterelektronenmikroskop (REM) zeigen Unterschiede in der Schichtmorphologie und Probenbedeckung zwischen den Proben mit Sprüh- und Folienbeschichtung. Die Unterschiede sind beispielhaft in Fig. 1 dargestellt.

Bei der Folienbeschichtung wird eine bessere Ecken- und Randbeschichtung als bei der Sprühbeschichtung deutlich, da der kristalline Bereich über die gesamte Probenoberfläche verteilt ist, sowohl an den Ecken als auch an den Seitenflächen (Fig. 1 links). Bei der Sprühbeschichtung sind die Ecken- und Randbereiche weniger kristallin als die Seitenflächen (Fig. 1 rechts).

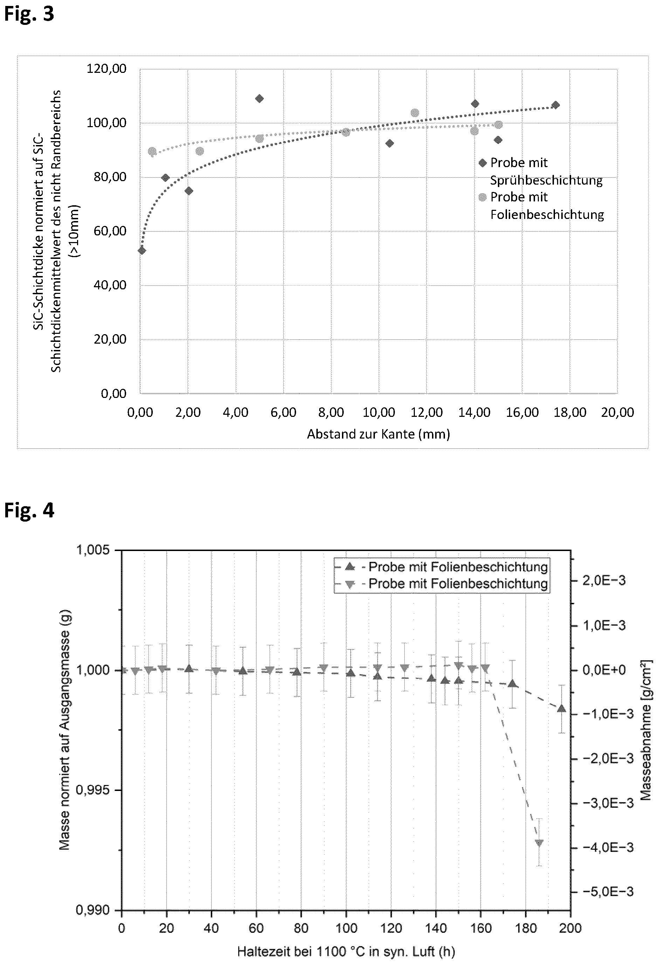

Um die optischen Unterschiede zu quantifizieren, wurden Schichtdicken der Siliciumcarbid (SiC)-Schicht mittels optischer Mikroskopie an Querschliffen vertikal zur Infiltrationsrichtung bestimmt und zum einen über die gesamte Probenlänge (5 cm) (Fig. 2) und zum anderen (Fig. 3) über den Nicht-Randbereich (Abstand zum Probenrand > 10 mm) gemittelt.

Um die SiC-Schichtdicken zu quantifizieren, wurde die SiC-Schichtdicke prozentual zur mittleren SiC-Schichtdicke über die gesamte Probenlänge berechnet.

Bei Abständen ≤ 10 mm zum Probenrand beträgt die Schichtdicke bei der Sprühbeschichtung 59,0 % bis 121,7 % und bei der Folienbeschichtung 93,5% bis 100,9%. Bei Abständen > 10 mm zum Probenrand beträgt die Schichtdicke bei der Sprühbeschichtung 103,3 % bis 119,0 % und bei der Folienbeschichtung 101,4 % bis 108,3 %.

| SiC-Schichtdicke zum Mittelwert | Folienbeschichtung | Sprühbeschichtung |
|---|---|---|
| Abstand 0-10mm: | 93,5% - 100,9% | 59,0% - 121,7% |
| Abstand >10mm: | 101,4% - 108,3% | 103,3% - 119,0 % |

Für eine zusätzlich Quantifizierung der SiC-Schichtdicken wurde die SiC-Schichtdicke prozentual zur mittleren SiC-Schichtdicke über den Nicht-Randbereich berechnet.

Bei Abständen ≤ 10 mm zum Probenrand beträgt die Schichtdicke bei der Sprühbeschichtung 52,9% bis ca. 92,5% und bei der Folienbeschichtung 89,5% bis 96,6%. Bei Abständen > 10 mm zum Probenrand beträgt die Schichtdicke bei der Sprühbeschichtung 92,5% bis 106,6 % und bei der Folienbeschichtung 97,0 % bis 103,6 %.

| SiC-Schichtdicke zum Mittelwert im nicht Randbereich | Folienbeschichtung | Sprühbeschichtung |
|---|---|---|
| Abstand 0-10mm: | 89,5% - 96,6% | 52,9% - 92,5% |
| Abstand >10mm: | 97,0% - 103,6% | 92,5% - 106,6 % |

Die gemessenen SiC-Schichtdickenverläufe sind in Fig. 2 und Fig. 3 dargestellt. Insbesondere bei Abstanden bis zu 10 mm zur Kante bildet sich bei der Sprühbeschichtung eine dünnere SiC-Schicht aus als bei der Folienbeschichtung. Die deutlich höhere Abweichung bei der sprühbeschichteten Probe lässt auf eine inhomogenere Probenbedeckung in Kantennähe schließen, verglichen mit der Folienbeschichtung. Diese Ergebnisse sind in guter Übereinstimmung mit den Beobachtungen aus den REM-Aufnahmen.

### Ausführungsbeispiel 2

### a) Herstellung der Suspension

Es wird eine Folien-Suspension mit folgender Zusammensetzung hergestellt:
- 57,9 Gew.% H₂O dest.
- 0,9 Gew.-% Carboxymethylcellulose (Bindemittel)
- 3,9 Gew.-% Polyethylenglycol 400 (Weichmacher)
- 0,3 Gew.-% Fettalkoholpolyalkylenglykolether (Entschäumer)
- 37,0 Gew-% Silicium-Granulat (d50 ca. 180 µm)

Zunächst werden das destillierte Wasser (H₂O dest.) und das Bindemittel eingewogen und in ein Gefäß gegeben. Zur Homogenisierung und Lösung des Bindemittels wird die Suspension händisch durchgeschüttelt, bis keine Klumpen mehr am Gefäßboden sind. Anschließend wird der Weichmacher abgewogen und hinzugegeben. Zur Homogenisierung wird die Suspension 20 h auf den Rollenstand bei 30 rpm (Gefäß) ausgelagert. Anschließend werden das Silicium-Granulat und der Entschäumer abgewogen und der Suspension hinzugefügt. Zur Homogenisierung der Suspension mit Feststoffanteil wird diese 15 min auf den Rollenstand bei 30 rpm (Gefäß) ausgelagert. Die Suspension wird anschließend mittels Rakeln zu einer Folie, der Dicke 1500 µm, verarbeitet und 24 h bei Raumtemperatur getrocknet.

### b) Beschichtungsvorgang

Ein poröses Graphit-Substrat, das einen mittleren Porendurchmesser von 1,8 µm aufweist, wird bereitgestellt. Es weist eine Substratgeometrie von 5×5×1 cm³ auf.

Das Aufbringen der Folie auf die Oberfläche (5x5 cm²) des Substrats erfolgt durch das Benetzen der Substratoberfläche mit Wasser und ein danach erfolgendes Auflegen und Andrücken der Folie.

### c) Trocknungsprozess

Das folien-beschichtete Substrat wird für 20 h bei 90 °C in Luft zum Trocknen in den Wärmeschrank ausgelagert.

### d) Infiltrationsprozess

Die getrockneten Substrate werden in graphitscher Probenkammer in einem Ofen platziert. Die beschichteten Flächen haben dabei keinen Kontakt zu den Ofeneinbauten. Es erfolgt eine Evakuierung des Ofenvolumens (10-3 mbar) und ein Aufheizen mit 250 K/h von Raumtemperatur auf 1500°C. Die Temperatur von 1500 °C wird für 5 h gehalten. Danach erfolgt ein Abkühlen von 1500 °C auf Raumtemperatur mit 200 K/h (Abkühlrate nimmt ab 700 °C auf bis zu 50 K/min ab, da keine aktive Kühlung vorhanden ist.) Nach Abkühlung erfolgt ein Fluten des Ofenvolumens mit Argon bis zu Atmosphärendruck und Entnahme der Substrate.

### Vergleichsbeispiel 2

### a) Herstellung der Suspension

Es wird eine Sprüh-Suspension mit folgender Zusammensetzung hergestellt:
- 66,7 Gew.% H₂O dest.
- 0,3 Gew.-% Peptapon 520 (Bindemittel)
- 33 Gew-% Silicium-Granulat (d50 ca. 800 µm)

Zunächst werden das destillierte Wasser (H₂O dest.) und das Bindemittel eingewogen und in ein Gefäß geben. Zur Homogenisierung und Lösung des Bindemittels wird die Suspension 20 h auf den Rollenstand bei 30 rpm (Gefäß) ausgelagert. Anschließend wird das Silicium-Granulat abgewogen und der Suspension hinzugefügt. Zur Homogenisierung der Suspension mit Feststoffanteil wird diese 15 min auf den Rollenstand bei 30 rpm (Gefäß) ausgelagert.

### b) Beschichtungsvorgang

Ein poröses Graphit-Substrat, das einen mittleren Porendurchmesser von 1,8 µm aufweist, wird bereitgestellt. Es weist eine Substratgeometrie von 5×5×1 cm³ auf.

Bei der Beschichtung des Substrats mittels Sprühauftragung erfolgt eine Zerstäubung der Suspension mittels Druckluft (4 bar). Die Suspension wird mittels Düse zugeführt (Durchmesser 2,5 mm). Die Substrate werden jeweils mit zu beschichtender Fläche (5x5 cm²) senkrecht zur Düse und damit zur Sprühstrahlrichtung gelagert, wobei das jeweilige Substrat mit 10 rpm rotiert wird. Der Abstand von Düse zu Substratoberfläche beträgt 20 cm. Die Beschichtung erfolgt für alle Substrate mit einer Sprühzeit von 8 s. Es erfolgt ein konstanter Auftrag von 0,06 ± 0,015 g Suspension/cm² bzw. 0,02 ± 0,005 g Si/cm².

### c) Trocknungsprozess

Das sprüh-beschichtete Substrat wird für 20 h bei 90 °C in Luft zum Trocknen in den Wärmeschrank ausgelagert.

### d) Infiltrationsprozess

Der Infiltrationsprozess läuft auf die gleiche Weise ab wie bei Ausführungsbeispiel 2.

### Vergleich und Analyse der in Ausführungsbeispiel 2 und Vergleichsbeispiel 2 erhaltenen behandelten Substrate

Die erhaltenen behandelten Substrate weisen alle an der jeweils behandelten Oberfläche keinerlei Rückstände von elementarem Silicium auf und zeichnen sich somit alle durch eine sehr hohe Oberflächengüte aus.

Zur Untersuchung des Oxidationsverhaltens wurde die sprüh- und folienbeschichteten Substrate für bis zu 198 h bei 1100 °C synthetischer Luft (200 ml/min, 1 bar) ausgesetzt und in Intervallen von 6 bzw. 24 h die Masse bestimmt.

Die Ergebnisse dieser Untersuchung des Oxidationsverhaltens sind in Fig. 4 zusammengefasst. In Fig. 4 ist der Massenverlauf (linke y-Achse) und Massenabnahmeverlauf (rechte y-Achse) von sprüh- und folienbeschichteten Proben in Abhängigkeit der Haltezeit bei 1100°C in synthetischer Luft dargestellt. Der Fehlerbalken bezieht sich ausschließlich auf die linke y-Achse.

Es wird deutlich, dass für die sprühbeschichtete Probe nach bis zu 162 h im Rahmen der Messgenauigkeit (± 0,001 g) keine Masseabnahme nachgewiesen werden konnte bzw. diese unter 5 · 10⁻³ g/cm² bezogen auf die Probenoberfläche beträgt. Bei Haltezeiten über 162 h hingegen wies die sprühbeschichte Probe eine Masseabnahme von 0,72 % auf.

Für die folienbeschichtete Probe wurde bis zu 174 h, im Rahmen der Messgenauigkeit (± 0,001 g), keine Masseabnahme nachgewiesen bzw. diese beträgt unter 5 · 10⁻³ g/cm² bezogen auf die Probenoberfläche. Bei Haltezeiten über 162 h hingegen wies die folienbeschichte Probe eine Masseabnahme von maximal 0,16 % bei 198 h auf.

Diese Untersuchung ist ein Beleg für die enorme Dichtigkeit der SiC-Schicht, ebenso wie der Infiltrationszone und damit der Oberfläche des behandelten Substrats.

Durch die homogenere Probenbedeckung bzw. SiC-Schichtbildung auch im Probenrandbereich der Folienbeschichtung, im Vergleich zur Sprühbeschichtung, kann somit das Oxidationsverhalten derartig beschichteter Bauteile signifikant verbessert werden. Es ergibt sich eine außergewöhnlich hohe Oxidationsbeständigkeit durch eine Reduktion der Masseabnahme.

## Patentansprüche

1. Verfahren zur Behandlung von porösen Graphitsubstraten, bei welchem
a) mindestens eine Folie bereitgestellt wird, wobei die mindestens eine Folie Silicium-Partikel und mindestens ein Bindemittel enthält,
b) die mindestens eine Folie auf mindestens eine Oberfläche eines porösen Graphitsubstrats aufgebracht wird, und
c) die mindestens eine aufgebrachte Folie mindestens einer Wärmebehandlung unterzogen wird, bei welcher die Silicium-Partikel zu einer Schmelze aufschmelzen, die teilweise in Poren des porösen Graphitsubstrats infiltriert, wobei in der Schmelze enthaltendes Silicium zumindest teilweise in Siliciumcarbid umgewandelt wird.

2. Verfahren nach dem vorhergehenden Anspruch, **dadurch gekennzeichnet, dass**
- die Silicium-Partikel eine mittlere Partikelgröße d50 im Bereich von 1 µm bis 2000 µm, bevorzugt im Bereich von 50 µm bis 1500 µm, besonders bevorzugt im Bereich von 100 µm bis 1000 µm, ganz besonders bevorzugt im Bereich von 510 µm bis 950 µm, insbesondere im Bereich von 600 µm bis 900 µm, aufweisen, und/oder
- die mindestens eine Folie eine Dicke von mindestens 500 µm, bevorzugt im Bereich von 500 µm bis 5000 µm, besonders bevorzugt im Bereich von 600 µm bis 4000 µm, ganz besonders bevorzugt im Bereich von 700 µm bis 3000 µm, insbesondere im Bereich von 800 µm bis 2000 µm, aufweist.

3. Verfahren nach einem der vorhergehenden Ansprüche, **dadurch gekennzeichnet, dass** die mindestens eine Folie mindestens einen ersten Bereich und mindestens einen zweiten Bereich aufweist, wobei der mindestens eine zweite Bereich eine höhere Silicium-Konzentration pro Flächeneinheit aufweist als der mindestens eine erste Bereich, wobei vorzugsweise die mindestens eine Folie mindestens einen dritten Bereich aufweist, der eine höhere Silicium-Konzentration pro Flächeneinheit aufweist als der mindestens eine zweite Bereich.

4. Verfahren nach einem der vorhergehenden Ansprüche, **dadurch gekennzeichnet, dass** die mindestens eine Folie in Schritt a) dadurch bereitgestellt wird, dass mindestens eine Suspension hergestellt wird, die die Silicium-Partikel, das mindestens eine Bindemittel und mindestens ein Lösungsmittel, vorzugsweise Wasser, sowie optional zusätzlich mindestens einen Weichmacher umfasst, und die mindestens eine Suspension zur mindestens einen Folie verarbeitet wird, vorzugsweise durch Rakeln oder Foliengießen.

5. Verfahren nach einem der vorhergehenden Ansprüche, **dadurch gekennzeichnet, dass**
- das mindestens eine Bindemittel ausgewählt ist aus der Gruppe bestehend aus Polyvinylalkohol; Polyethylenglycol; Polyvinylbutyral; Polyacrylsäure; Polyurethan; Polymethylmethacrylat; Chloropren-Kautschuk; Phenolharz; Acrylharz; Cellulose; Cellulose-Derivaten, vorzugsweise Carboxymethylcellulose, Hydroxyethylcellulose; Alginsäure; Dextrin; sowie Mischungen hiervon, wobei das mindestens eine Bindemittel vorzugsweise ausgewählt ist aus der Gruppe bestehend aus Polyvinylalkohol, Carboxymethylcellulose, Polyethylenglycol, sowie Mischungen hiervon, und/oder
- die mindestens eine Folie mindestens einen sich vom mindestens einen Bindemittel unterscheidenden Weichmacher enthält, wobei der mindestens eine Weichmacher vorzugsweise ausgewählt ist aus der Gruppe bestehend aus Benzylbutylphthalat, Dibutylphthalat, Dimethylphthalat, Dioctylphthalat, Glycerin, Polyvinylpyrrolidon, Polypropylenglycol, Octadecansäurebutylester, sowie Mischungen hiervon.

6. Verfahren nach einem der vorhergehenden Ansprüche, **dadurch gekennzeichnet, dass** die mindestens eine Folie
- 40 bis 99,9 Gew.-%, bevorzugt 55 bis 95 Gew.-%, besonders bevorzugt 60 bis 90 Gew.-%, der Silicium-Partikel, bezogen auf das Gesamtgewicht der mindestens einen Folie, enthält, und/oder
- 0,1 bis 25 Gew.-%, bevorzugt 1 bis 10 Gew.-%, besonders bevorzugt 3 bis 5 Gew.-%, des mindestens einen Bindemittels, bezogen auf das Gesamtgewicht der mindestens einen Folie, enthält, und/oder
- 0 bis 35 Gew.-%, bevorzugt 1 bis 15 Gew.-%, besonders bevorzugt 5 bis 10 Gew.-%, mindestens eines sich vom mindestens einen Bindemittel unterscheidenden Weichmachers, bezogen auf das Gesamtgewicht der mindestens einen Folie, enthält.

7. Verfahren nach einem der vorhergehenden Ansprüche, **dadurch gekennzeichnet, dass**
- die mindestens eine Folie vor, während, und/oder nach Schritt b) geschnitten, gestanzt und/oder gefaltet wird, und/oder
- die mindestens eine Folie mindestens zwei Folien umfasst, die vor, während, und/oder nach Schritt b) aneinandergefügt werden.

8. Verfahren nach einem der vorhergehenden Ansprüche, **dadurch gekennzeichnet, dass** das Aufbringen der mindestens einen Folie auf die mindestens eine Oberfläche des porösen Graphitsubstrats in Schritt b) dadurch erfolgt, dass zunächst die mindestens eine Oberfläche des porösen Graphitsubstrats und/oder die mindestens eine Folie mit mindestens einem Lösungsmittel, in welchem das mindestens eine Bindemittel zumindest teilweise löslich ist, vorzugsweise Wasser, benetzt wird, anschließend die mindestens eine Folie mit der mindestens einen Oberfläche des porösen Graphitsubstrats in Kontakt gebracht wird, und die mindestens eine mit der mindestens einen Oberfläche des porösen Substrats in Kontakt stehende Folie mindestens einem Trocknungsprozess unterzogen wird, wobei der mindestens eine Trocknungsprozess vorzugsweise bei einer Temperatur im Bereich von 10 °C bis 200 °C, bevorzugt von 80 °C bis 100 °C, und/oder über eine Dauer von 15 min bis 48 h, bevorzugt von 1 h bis 12 h, erfolgt.

9. Verfahren nach einem der vorhergehenden Ansprüche, **dadurch gekennzeichnet, dass** die mindestens eine Wärmebehandlung
- bei einer Temperatur im Bereich von 1400 °C bis 1800 °C, bevorzugt von 1410 °C bis 1700 °C, besonders bevorzugt von 1450 °C bis 1550 °C, erfolgt, und/oder
- über eine Dauer von 1 h bis 10 h, bevorzugt von 4 h bis 6 h, erfolgt, und/oder
- unter Vakuum oder unter Inertgasatmosphäre, bevorzugt Argon-Atmosphäre, bei einem (Prozess-)Druck von 10 mbar bis 2000 mbar, bevorzugt von 100 mbar bis 1800 mbar, besonders bevorzugt von 500 mbar bis 1500 mbar, ganz besonders bevorzugt von 800 mbar bis 1200 mbar,
erfolgt.

10. Verfahren nach einem der vorhergehenden Ansprüche, **dadurch gekennzeichnet, dass**
- das poröse Graphitsubstrat ein poröses iso-Graphitsubstrat ist, und/oder
- das poröse Graphitsubstrat ein Graphitmaterial enthält oder daraus besteht, welches einen thermischen Ausdehnungskoeffizienten von mindestens 2,8 · 10⁻⁶ K⁻¹, bevorzugt von mindestens 3,0 · 10⁻⁶ K⁻¹, besonders bevorzugt von mindestens 3,2 · 10⁻⁶ K⁻¹, aufweist, und/oder
- das poröse Graphitsubstrat eine offene Porosität, gemessen mittels Quecksilberporosimetrie, von mindestens 12 %, bevorzugt von 12 % bis 30 %, besonders bevorzugt von 14 % bis 25 %, ganz besonders bevorzugt von 15 % bis 20 %, aufweist, und/oder
- die Poren des porösen Graphitsubstrats einen mittleren Porendurchmesser im Bereich von 0,1 µm bis 10 µm, bevorzugt von 1 µm bis 5 µm, besonders bevorzugt von 1,5 µm bis 5 µm aufweisen.

11. Behandeltes Substrat umfassend ein Graphitmaterial mit Poren, wobei das Substrat an mindestens einer Oberfläche eine Siliciumcarbidschicht und eine darunter liegende Infiltrationszone, in der die Poren des Graphitmaterials zumindest teilweise mit Siliciumcarbid gefüllt sind, aufweist, wobei die Siliciumcarbidschicht in mindestens einem an mindestens eine Kante des behandelten Substrats angrenzenden Bereich eine Dicke aufweist, die mindestens 70 % der mittleren Dicke der Siliciumcarbidschicht entspricht.

12. Behandeltes Substrat nach Anspruch 11, **dadurch gekennzeichnet, dass** das behandelte Substrat
- eine Permeabilität von maximal 1 · 10⁻¹⁶ m², bevorzugt von maximal 1 · 10⁻¹⁷ m², besonders bevorzugt von maximal 1 · 10⁻¹⁸ m², ganz besonders bevorzugt von maximal 1 · 10⁻¹⁹ m², aufweist, und/oder
- eine Permeabilität aufweist, die um einen Faktor von mindestens 10, bevorzugt von mindestens 100, geringer ist als eine Permeabilität des Substrats vor der Behandlung, und/oder
- in der Infiltrationszone eine offene Porosität, bestimmt mittels Quecksilberporosimetrie, von maximal 10 %, bevorzugt maximal 8 %, besonders bevorzugt maximal 5 %, aufweist, und/oder
- in der Infiltrationszone eine offene Porosität, bestimmt mittels Quecksilberporosimetrie aufweist, die um mindestens 7 %, bevorzugt um mindestens 10 %, besonders bevorzugt um mindestens 12 %, bezogen auf das Gesamtvolumen des behandelten Substrats, geringer ist als eine offene Porosität des behandelten Substrats außerhalb der Infiltrationszone, und/oder
- eine Oxidationsbeständigkeit aufweist, die **dadurch gekennzeichnet ist, dass**, nach Aussetzen des behandelten Substrats für mehr als 162 h, bevorzugt für mehr als 170 h, besonders bevorzugt für mehr als 180 h, ganz besonders bevorzugt für mehr als 190 h, bei 1100 °C an synthetischer Luft (200 ml/min, 1 bar), eine Masseabnahme des behandelten Substrats weniger als 0,72 %, bevorzugt weniger als 0,5 %, besonders bevorzugt weniger als 0,3 %, ganz besonders bevorzugt weniger als 0,2 %, beträgt, und/oder
- kein elementares Silicium aufweist, und/oder
- mit einem Verfahren gemäß einem der Ansprüche 1 bis 10 herstellbar oder hergestellt ist.

13. Behandeltes Substrat nach Anspruch 11 oder 12, **dadurch gekennzeichnet, dass**
- das Graphitmaterial ein iso-Graphitmaterial ist, und/oder
- die Infiltrationszone eine mittlere Dicke von mindestens 100 µm, bevorzugt von 100 µm bis 1200 µm, besonders bevorzugt von 200 µm bis 800 µm, aufweist, und/oder
- das Siliciumcarbid, mit dem die Poren des Graphitmaterials in der Infiltrationszone zumindest teilweise gefüllt sind, 3C-SiC enthält, vorzugsweise 3C-SiC als Hauptphase aufweist, und/oder
- eine lokale Konzentration an Siliciumcarbid in der Infiltrationszone mit zunehmender Entfernung von der mindestens einer Oberfläche abnimmt, und/oder
- die Infiltrationszone mindestens einen ersten Bereich und mindestens einen zweiten Bereich aufweist, wobei der mindestens eine zweite Bereich gleich weit von der mindestens einen Oberfläche entfernt ist wie der mindestens eine erste Bereich und eine höhere Siliciumcarbid-Konzentration pro Volumeneinheit aufweist als der mindestens eine erste Bereich, wobei vorzugsweise die mindestens eine Infiltrationszone mindestens einen dritten Bereich aufweist, der gleich weit von der mindestens einen Oberfläche entfernt ist wie der mindestens eine zweite Bereich und eine höhere Siliciumcarbid-Konzentration pro Volumeneinheit aufweist als der mindestens eine zweite Bereich.

14. Behandeltes Substrat nach einem der Ansprüche 11 bis 13, **dadurch gekennzeichnet, dass**
- die Siliciumcarbidschicht in dem mindesten einen, vorzugsweise in jedem, an mindestens eine Kante des behandelten Substrats angrenzenden Bereich eine Dicke aufweist, die mindestens 75 %, bevorzugt mindestens 80 %, besonders bevorzugt mindestens 85 %, ganz besonders bevorzugt mindestens 90 %, und/oder höchstens 125 %, bevorzugt höchstens 120 %, besonders bevorzugt höchstens 115 %, ganz besonders bevorzugt höchstens 110 %, insbesondere höchstens 105 %, der mittleren Dicke der Siliciumcarbidschicht entspricht, und/oder
- die Siliciumcarbidschicht an allen Stellen, die maximal 2 mm, bevorzugt maximal 4 mm, besonders bevorzugt maximal 10 mm, von mindestens einer Kante des behandelten Substrats entfernt sind, eine Dicke aufweist, die mindestens 70 %, bevorzugt mindestens 75 %, besonders bevorzugt mindestens 80 %, ganz besonders bevorzugt mindestens 85 %, insbesondere mindestens 90 %, und/oder höchstens 125 %, bevorzugt höchstens 120 %, besonders bevorzugt höchstens 115 %, ganz besonders bevorzugt höchstens 110 %, insbesondere höchstens 105 %, der mittleren Dicke der Siliciumcarbidschicht entspricht, und/oder
- die Siliciumcarbidschicht an allen Stellen, die von mindestens einer Kante des behandelten Substrats maximal 10, bevorzugt maximal 20 %, des Abstands zwischen der mindestens einen Kante und einer der mindestens einen Kante gegenüberliegenden Kante des Substrats entfernt sind, eine Dicke aufweist, die mindestens 70 %, bevorzugt mindestens 75 %, besonders bevorzugt mindestens 80 %, ganz besonders bevorzugt mindestens 85 %, insbesondere mindestens 90 %, und/oder höchstens 125 %, bevorzugt höchstens 120 %, besonders bevorzugt höchstens 115 %, ganz besonders bevorzugt höchstens 110 %, insbesondere höchstens 105 %, der mittleren Dicke der Siliciumcarbidschicht entspricht.

15. Verwendung eines behandelten Substrats gemäß einem der Ansprüche 11 bis 14 als Komponente für Hochtemperaturöfen, bevorzugt Heizer, Isolationskomponente, Halterung; als Tiegel oder Tiegelelement.

## Geänderte Patentansprüche

### Geänderte Patentansprüche gemäss Regel 137(2) EPÜ.

1. Verfahren zur Behandlung von porösen Graphitsubstraten, bei welchem
a) mindestens eine Folie bereitgestellt wird, wobei die mindestens eine Folie Silicium-Partikel und mindestens ein Bindemittel enthält,
b) die mindestens eine Folie auf mindestens eine Oberfläche eines porösen Graphitsubstrats aufgebracht wird, und
c) die mindestens eine aufgebrachte Folie mindestens einer Wärmebehandlung unterzogen wird, bei welcher die Silicium-Partikel zu einer Schmelze aufschmelzen, die teilweise in Poren des porösen Graphitsubstrats infiltriert, wobei in der Schmelze enthaltendes Silicium zumindest teilweise in Siliciumcarbid umgewandelt wird.

2. Verfahren nach dem vorhergehenden Anspruch, **dadurch gekennzeichnet, dass**
- die Silicium-Partikel eine mittlere Partikelgröße d50 im Bereich von 1 µm bis 2000 µm, bevorzugt im Bereich von 50 µm bis 1500 µm, besonders bevorzugt im Bereich von 100 µm bis 1000 µm, ganz besonders bevorzugt im Bereich von 510 µm bis 950 µm, insbesondere im Bereich von 600 µm bis 900 µm, aufweisen, und
- die mindestens eine Folie eine Dicke von mindestens 500 µm, bevorzugt im Bereich von 500 µm bis 5000 µm, besonders bevorzugt im Bereich von 600 µm bis 4000 µm, ganz besonders bevorzugt im Bereich von 700 µm bis 3000 µm, insbesondere im Bereich von 800 µm bis 2000 µm, aufweist.

3. Verfahren nach einem der vorhergehenden Ansprüche, **dadurch gekennzeichnet, dass** die mindestens eine Folie mindestens einen ersten Bereich und mindestens einen zweiten Bereich aufweist, wobei der mindestens eine zweite Bereich eine höhere Silicium-Konzentration pro Flächeneinheit aufweist als der mindestens eine erste Bereich, wobei vorzugsweise die mindestens eine Folie mindestens einen dritten Bereich aufweist, der eine höhere Silicium-Konzentration pro Flächeneinheit aufweist als der mindestens eine zweite Bereich.

4. Verfahren nach einem der vorhergehenden Ansprüche, **dadurch gekennzeichnet, dass** die mindestens eine Folie in Schritt a) dadurch bereitgestellt wird, dass mindestens eine Suspension hergestellt wird, die die Silicium-Partikel, das mindestens eine Bindemittel und mindestens ein Lösungsmittel, vorzugsweise Wasser, sowie optional zusätzlich mindestens einen Weichmacher umfasst, und die mindestens eine Suspension zur mindestens einen Folie verarbeitet wird, vorzugsweise durch Rakeln oder Foliengießen.

5. Verfahren nach einem der vorhergehenden Ansprüche, **dadurch gekennzeichnet, dass**
- das mindestens eine Bindemittel ausgewählt ist aus der Gruppe bestehend aus Polyvinylalkohol; Polyethylenglycol; Polyvinylbutyral; Polyacrylsäure; Polyurethan; Polymethylmethacrylat; Chloropren-Kautschuk; Phenolharz; Acrylharz; Cellulose; Cellulose-Derivaten, vorzugsweise Carboxymethylcellulose, Hydroxyethylcellulose; Alginsäure; Dextrin; sowie Mischungen hiervon, wobei das mindestens eine Bindemittel vorzugsweise ausgewählt ist aus der Gruppe bestehend aus Polyvinylalkohol, Carboxymethylcellulose, Polyethylenglycol, sowie Mischungen hiervon, und/oder
- die mindestens eine Folie mindestens einen sich vom mindestens einen Bindemittel unterscheidenden Weichmacher enthält, wobei der mindestens eine Weichmacher vorzugsweise ausgewählt ist aus der Gruppe bestehend aus Benzylbutylphthalat, Dibutylphthalat, Dimethylphthalat, Dioctylphthalat, Glycerin, Polyvinylpyrrolidon, Polypropylenglycol, Octadecansäurebutylester, sowie Mischungen hiervon.

6. Verfahren nach einem der vorhergehenden Ansprüche, **dadurch gekennzeichnet, dass** die mindestens eine Folie
- 40 bis 99,9 Gew.-%, bevorzugt 55 bis 95 Gew.-%, besonders bevorzugt 60 bis 90 Gew.-%, der Silicium-Partikel, bezogen auf das Gesamtgewicht der mindestens einen Folie, enthält, und
- 0,1 bis 25 Gew.-%, bevorzugt 1 bis 10 Gew.-%, besonders bevorzugt 3 bis 5 Gew.-%, des mindestens einen Bindemittels, bezogen auf das Gesamtgewicht der mindestens einen Folie, enthält, und
- 0 bis 35 Gew.-%, bevorzugt 1 bis 15 Gew.-%, besonders bevorzugt 5 bis 10 Gew.-%, mindestens eines sich vom mindestens einen Bindemittel unterscheidenden Weichmachers, bezogen auf das Gesamtgewicht der mindestens einen Folie, enthält.

7. Verfahren nach einem der vorhergehenden Ansprüche, **dadurch gekennzeichnet, dass**
- die mindestens eine Folie vor, während, und/oder nach Schritt b) geschnitten, gestanzt und/oder gefaltet wird, und/oder
- die mindestens eine Folie mindestens zwei Folien umfasst, die vor, während, und/oder nach Schritt b) aneinandergefügt werden.

8. Verfahren nach einem der vorhergehenden Ansprüche, **dadurch gekennzeichnet, dass** das Aufbringen der mindestens einen Folie auf die mindestens eine Oberfläche des porösen Graphitsubstrats in Schritt b) dadurch erfolgt, dass zunächst die mindestens eine Oberfläche des porösen Graphitsubstrats und/oder die mindestens eine Folie mit mindestens einem Lösungsmittel, in welchem das mindestens eine Bindemittel zumindest teilweise löslich ist, vorzugsweise Wasser, benetzt wird, anschließend die mindestens eine Folie mit der mindestens einen Oberfläche des porösen Graphitsubstrats in Kontakt gebracht wird, und die mindestens eine mit der mindestens einen Oberfläche des porösen Substrats in Kontakt stehende Folie mindestens einem Trocknungsprozess unterzogen wird, wobei der mindestens eine Trocknungsprozess vorzugsweise bei einer Temperatur im Bereich von 10 °C bis 200 °C, bevorzugt von 80 °C bis 100 °C, und/oder über eine Dauer von 15 min bis 48 h, bevorzugt von 1 h bis 12 h, erfolgt.

9. Verfahren nach einem der vorhergehenden Ansprüche, **dadurch gekennzeichnet, dass** die mindestens eine Wärmebehandlung
- bei einer Temperatur im Bereich von 1400 °C bis 1800 °C, bevorzugt von 1410 °C bis 1700 °C, besonders bevorzugt von 1450 °C bis 1550 °C, erfolgt, und
- über eine Dauer von 1 h bis 10 h, bevorzugt von 4 h bis 6 h, erfolgt, und
- unter Vakuum oder unter Inertgasatmosphäre, bevorzugt Argon-Atmosphäre, bei einem (Prozess-)Druck von 10 mbar bis 2000 mbar, bevorzugt von 100 mbar bis 1800 mbar, besonders bevorzugt von 500 mbar bis 1500 mbar, ganz besonders bevorzugt von 800 mbar bis 1200 mbar,
erfolgt.

10. Verfahren nach einem der vorhergehenden Ansprüche, **dadurch gekennzeichnet, dass**
- das poröse Graphitsubstrat ein poröses iso-Graphitsubstrat ist, und
- das poröse Graphitsubstrat ein Graphitmaterial enthält oder daraus besteht, welches einen thermischen Ausdehnungskoeffizienten von mindestens 2,8 · 10⁻⁶ K⁻¹, bevorzugt von mindestens 3,0 · 10⁻⁶ K⁻¹, besonders bevorzugt von mindestens 3,2 · 10⁻⁶ K⁻¹, aufweist, und
- das poröse Graphitsubstrat eine offene Porosität, gemessen mittels Quecksilberporosimetrie, von mindestens 12 %, bevorzugt von 12 % bis 30 %, besonders bevorzugt von 14 % bis 25 %, ganz besonders bevorzugt von 15 % bis 20 %, aufweist, und
- die Poren des porösen Graphitsubstrats einen mittleren Porendurchmesser im Bereich von 0,1 µm bis 10 µm, bevorzugt von 1 µm bis 5 µm, besonders bevorzugt von 1,5 µm bis 5 µm aufweisen.

11. Behandeltes Substrat umfassend ein Graphitmaterial mit Poren, wobei das Substrat an mindestens einer Oberfläche eine Siliciumcarbidschicht und eine darunter liegende Infiltrationszone, in der die Poren des Graphitmaterials zumindest teilweise mit Siliciumcarbid gefüllt sind, aufweist, wobei die Siliciumcarbidschicht in mindestens einem an mindestens eine Kante des behandelten Substrats angrenzenden Bereich eine Dicke aufweist, die mindestens 70 % der mittleren Dicke der Siliciumcarbidschicht entspricht, wobei die mindestens eine Kante jeweils einen Kantenradius, bestimmt gemäß DIN EN ISO 13715:2020-01, im Bereich von R₀ bis R₅ aufweist, wobei ein Winkel zwischen zwei jeweils die mindestens eine Kante bildenden Flächen, bestimmt gemäß DIN EN ISO 13715:2020-01, im Bereich von 10° bis 170° liegt, und wobei das behandelte Substrat mit einem Verfahren gemäß einem der Ansprüche 1 bis 10 herstellbar oder hergestellt ist.

12. Behandeltes Substrat nach Anspruch 11, **dadurch gekennzeichnet, dass** das behandelte Substrat
- eine Permeabilität, bestimmt mittels Differenzdruckverfahren, von maximal 1 · 10⁻¹⁶ m², bevorzugt von maximal 1 · 10⁻¹⁷ m², besonders bevorzugt von maximal 1 · 10⁻¹⁸ m², ganz besonders bevorzugt von maximal 1 · 10⁻¹⁹ m², aufweist, und
- eine Permeabilität, bestimmt mittels Differenzdruckverfahren, aufweist, die um einen Faktor von mindestens 10, bevorzugt von mindestens 100, geringer ist als eine Permeabilität des Substrats vor der Behandlung, bestimmt mittels Differenzdruckverfahren, und
- in der Infiltrationszone eine offene Porosität, bestimmt mittels Quecksilberporosimetrie, von maximal 10 %, bevorzugt maximal 8 %, besonders bevorzugt maximal 5 %, aufweist, und
- in der Infiltrationszone eine offene Porosität, bestimmt mittels Quecksilberporosimetrie aufweist, die um mindestens 7 %, bevorzugt um mindestens 10 %, besonders bevorzugt um mindestens 12 %, bezogen auf das Gesamtvolumen des behandelten Substrats, geringer ist als eine offene Porosität des behandelten Substrats außerhalb der Infiltrationszone, und
- eine Oxidationsbeständigkeit aufweist, die **dadurch gekennzeichnet ist, dass**, nach Aussetzen des behandelten Substrats für mehr als 162 h, bevorzugt für mehr als 170 h, besonders bevorzugt für mehr als 180 h, ganz besonders bevorzugt für mehr als 190 h, bei 1100 °C an synthetischer Luft (200 ml/min, 1 bar), eine Masseabnahme des behandelten Substrats weniger als 0,72 %, bevorzugt weniger als 0,5 %, besonders bevorzugt weniger als 0,3 %, ganz besonders bevorzugt weniger als 0,2 %, beträgt, und
- kein elementares Silicium aufweist.

13. Behandeltes Substrat nach Anspruch 11 oder 12, **dadurch gekennzeichnet, dass**
- die Infiltrationszone eine mittlere Dicke von mindestens 100 µm, bevorzugt von 100 µm bis 1200 µm, besonders bevorzugt von 200 µm bis 800 µm, aufweist, und
- das Siliciumcarbid, mit dem die Poren des Graphitmaterials in der Infiltrationszone zumindest teilweise gefüllt sind, 3C-SiC enthält, vorzugsweise 3C-SiC als Hauptphase aufweist, und
- eine lokale Konzentration an Siliciumcarbid in der Infiltrationszone mit zunehmender Entfernung von der mindestens einer Oberfläche abnimmt.

14. Behandeltes Substrat nach einem der Ansprüche 11 bis 13, **dadurch gekennzeichnet, dass**
- die Siliciumcarbidschicht in dem mindesten einen, vorzugsweise in jedem, an mindestens eine Kante des behandelten Substrats angrenzenden Bereich eine Dicke aufweist, die mindestens 75 %, bevorzugt mindestens 80 %, besonders bevorzugt mindestens 85 %, ganz besonders bevorzugt mindestens 90 %, und/oder höchstens 125 %, bevorzugt höchstens 120 %, besonders bevorzugt höchstens 115 %, ganz besonders bevorzugt höchstens 110 %, insbesondere höchstens 105 %, der mittleren Dicke der Siliciumcarbidschicht entspricht, und/oder
- die Siliciumcarbidschicht an allen Stellen, die maximal 2 mm, bevorzugt maximal 4 mm, besonders bevorzugt maximal 10 mm, von mindestens einer Kante des behandelten Substrats entfernt sind, eine Dicke aufweist, die mindestens 70 %, bevorzugt mindestens 75 %, besonders bevorzugt mindestens 80 %, ganz besonders bevorzugt mindestens 85 %, insbesondere mindestens 90 %, und/oder höchstens 125 %, bevorzugt höchstens 120 %, besonders bevorzugt höchstens 115 %, ganz besonders bevorzugt höchstens 110 %, insbesondere höchstens 105 %, der mittleren Dicke der Siliciumcarbidschicht entspricht, und/oder
- die Siliciumcarbidschicht an allen Stellen, die von mindestens einer Kante des behandelten Substrats maximal 10, bevorzugt maximal 20 %, des Abstands zwischen der mindestens einen Kante und einer der mindestens einen Kante gegenüberliegenden Kante des Substrats entfernt sind, eine Dicke aufweist, die mindestens 70 %, bevorzugt mindestens 75 %, besonders bevorzugt mindestens 80 %, ganz besonders bevorzugt mindestens 85 %, insbesondere mindestens 90 %, und/oder höchstens 125 %, bevorzugt höchstens 120 %, besonders bevorzugt höchstens 115 %, ganz besonders bevorzugt höchstens 110 %, insbesondere höchstens 105 %, der mittleren Dicke der Siliciumcarbidschicht entspricht.

15. Verwendung eines behandelten Substrats gemäß einem der Ansprüche 11 bis 14 als Komponente für Hochtemperaturöfen, bevorzugt Heizer, Isolationskomponente, Halterung; als Tiegel oder Tiegelelement.
